# EUROPEAN PATENT APPLICATION

(11) **EP 4 734 454 A1**
(43) Date of publication of application: **29.04.2026**
(21) Application number: 24826221.4
(22) Date of filing: 18.06.2024
(51) Int. Cl.: H04L 12/28, F24F 11/65, F24F 11/56, D06F 34/05, G16Y 10/80, G16Y 40/30, D06F 101/20, F24F 120/20

(54) **HOME APPLIANCE AND SYSTEM INCLUDING SAME**

(30) Priority: 23.06.2023 KR 20230080893; 27.09.2023 KR 20230130114; 12.03.2024 KR 20240034768
(71) Applicant: LG Electronics Inc., Yeongdeungpo-gu Seoul 07336 (KR)
(72) Inventor: SHIN, Kyuyeol, Seoul 08592 (KR); KIM, Kwanghyun, Seoul 08592 (KR); LEE, Mira, Seoul 08592 (KR); JEON, Seungtae, Seoul 08592 (KR); AHN, Hyoshik, Seoul 08592 (KR); KIM, Donghyeon, Seoul 08592 (KR); LEE, Jaeho, Seoul 08592 (KR)
(74) Representative: Vossius & Partner Patentanwälte Rechtsanwälte mbB
(86) International application number: PCT/KR2024/008382
(87) International publication number: WO 2024/262905

(57) **Abstract**

The present disclosure relates to a home appliance and a system including same. The system according to an embodiment of the present disclosure may comprise: a home appliance; and an external device which is provided outside the home appliance and determines at least one customized mode among a plurality of modes on the basis of information provided from a user, wherein the home appliance stores the at least one customized mode transmitted from the external device and provides same so that the user may select one of the at least one customized mode.

## Description

### [Technical Field]

The present disclosure relates to a home appliance and a system including the home appliance, and particularly, to a home appliance that provides a plurality of operation modes related to the operation of the home appliance, and a system including the home appliance.

### [Background Art]

A home appliance is a device used for the convenience of a user. Further, home appliances such as image display devices, air conditioners, and laundry treatment apparatuses, which are used in specific spaces such as homes or offices, perform unique functions and operations in accordance with user operation.

An air conditioner is installed to provide a more pleasant indoor environment for humans by discharging cold or warm air into an indoor space to adjust the indoor temperature and purify the indoor air in order to create a pleasant indoor environment. In general, an air conditioner includes an indoor unit that is installed indoors and includes a heat exchanger, and an outdoor unit that includes a compressor and a heat exchanger and supplies a refrigerant to the indoor unit.

A laundry treatment apparatus is a device that can perform various operation courses for treating laundry, such as a washing course for removing contaminants from laundry or a drying course for removing moisture present in laundry by placing clothing, bedding, and the like (hereinafter referred to as "laundry") into a drum. A laundry treatment apparatus may include a cabinet that forms an exterior and may include a drum that is provided inside the cabinet and receives laundry. Further, when water is used in an operation course for laundry, a tub may be provided inside the cabinet and the drum may be installed inside the tub.

Meanwhile, a home appliance provides various modes (or courses). Further, a user can operate the home appliance using a search unit or the like and check various modes (or courses) through a display unit. The user can select any one of the various modes (or courses) and perform the operation.

However, as conditions or characteristics related to the operation of home appliances are becoming more varied, the modes (or courses) related to the home appliances are also becoming more varied, and accordingly, users may have difficulty in identifying modes (or courses) that are necessary or suitable for the users.

Further, even if it is possible to select some of various modes (or courses) through a search unit or the like the home appliances to facilitate differentiation, users have difficulty in understanding the characteristics of each mode (or course) only through a display unit. Moreover, during the process of using home appliances, time is spent due to the selection process of such modes (or courses), which may cause inconvenience.

Therefore, among various modes (or courses) available in home appliances, it becomes necessary to effectively identify and conveniently provide modes (or courses) that are necessary or suitable for users. Furthermore, it is an important task in the present technical field to effectively provide modes (or courses) suitable for users so that inconvenience during use can be relieved even if users do not distinguish the modes (or courses) through home appliances.

### [Disclosure]

### [Technical Problem]

An objective of the present disclosure is to solve the problems described above and other problems.

Another objective is to provide a home appliance that can conveniently provide a mode (or course) that is necessary or suitable for a user among various modes (or courses), and a system including the home appliance.

Another objective is to provide a home appliance in which a customized mode (or customized course) for a user can be set among various modes (or courses) without using an air conditioner, and a system including the home appliance.

Another objective is to provide a home appliance in which a customized mode (or customized course) for a user can be preset and provided to the user prior to use of an air conditioner, and a system including the home appliance.

### [Technical Solution]

A system according to an embodiment of the present disclosure includes a home appliance and an external device, and the external device may include a terminal and/or a server.

Among a plurality of modes that can be performed by the home appliance, some may be determined as customized modes for a user by the external device and provided to the home appliance.

According to an embodiment of the present disclosure, during the process in which a user purchases and receives a home appliance, the customized mode is preset in the home appliance, and accordingly, the user can conveniently use a customized mode necessary or suitable for the user from immediately after receiving the home appliance even without separate mode settings.

In order to achieve the objectives, the system according to an embodiment of the present disclosure may include: a home appliance; and an external device provided outside the home appliance and determining at least one customized mode among a plurality of modes on the basis of information provided from a user, wherein the home appliance may store the at least one customized mode transmitted from the external device, and provides one of the at least one customized mode to be selected by the user.

In order to achieve the objectives, a home appliance according to an embodiment of the present disclosure includes: a communication unit communicating with an external device provided outside the home appliance; a memory; and a control unit, wherein the control unit may store at least one customized mode transmitted from the external device in the memory and provide one of the at least one customized mode to be selected by the user, and the customized mode may be determined by the external device on the basis of information provided from the user among a plurality of modes.

### [Advantageous Effects]

The effects of the home appliance according to the present disclosure and a system including the home appliance are described as follows.

According to at least one embodiment of the present disclosure, it is possible to conveniently provide modes (or courses) that are necessary or suitable for a user among various modes (or courses).

According to at least one embodiment of the present disclosure, a customized mode for a user can be set among various modes (or courses) without using an air conditioner.

According to at least one embodiment of the present disclosure, a customized mode (or customized course) for a user can be set in advance and provided to the user before use of an air conditioner.

Applicability and an additional range of the present disclosure will be made clear from the following detailed description. However, various changes and modification within the spirit and scope of the present disclosure can be clearly understood by those skilled in the art, so the detailed description and specific embodiments such as preferred embodiments of the present disclosure should be understood only as examples.

### [Description of Drawings]

FIGS. 1a and 1b are diagrams schematically illustrating a system that includes a home appliance and an external device, according to various embodiments of the present disclosure.
FIG. 2 is a block diagram of a home appliance according to an embodiment of the present disclosure.
FIG. 3 is a diagram illustrating an example of the configuration of an air conditioner that is an example of a home appliance according to an embodiment of the present disclosure.
FIG. 4 is a schematic diagram of an outdoor unit and an indoor unit according to an embodiment of the present disclosure.
FIG. 5 is a perspective view illustrating the exterior of a laundry treatment apparatus that is an example of a home appliance according to an embodiment of the present disclosure.
FIG. 6 is a cross-sectional view illustrating the interior of a laundry treatment apparatus in which a washing course for laundry can be performed, according to an embodiment of the present disclosure.
FIG. 7 is a cross-sectional view illustrating the interior of a laundry treatment apparatus in which a drying course for laundry can be performed, according to an embodiment of the present disclosure.
FIG. 8 is a conceptual diagram illustrating a process from the purchase of an air conditioner to its use by a user, according to an embodiment of the present disclosure.
FIG. 9 is a diagram illustrating a mode recommendation process in a purchase and delivery process, according to an embodiment of the present disclosure.
FIG. 10 is a diagram illustrating a subscription process in the purchase and delivery process, according to an embodiment of the present disclosure.
FIG. 11 is a diagram illustrating a suggestion process in the mode recommendation process, according to an embodiment of the present disclosure.
FIG. 12 is a diagram illustrating an input process in the mode recommendation process, according to an embodiment of the present disclosure.
FIGS. 13 and 14 are diagrams illustrating a provision process in the mode recommendation process, according to an embodiment of the present disclosure.
FIG. 15 is a diagram illustrating a modification process in the mode recommendation process, according to an embodiment of the present disclosure.
FIG. 16 is a diagram referenced in the description of the operation of an air conditioner, according to an embodiment of the present disclosure.
FIG. 17 is a diagram illustrating a subscription process in a purchase and delivery process, according to an embodiment of the present disclosure.
FIG. 18 is a diagram illustrating a suggestion process in a course recommendation process, according to an embodiment of the present disclosure.
FIG. 19 is a diagram illustrating an input process in the course recommendation process, according to an embodiment of the present disclosure.
FIG. 20 is a diagram illustrating a provision process in the course recommendation process, according to an embodiment of the present disclosure.
FIG. 21 is a diagram illustrating a modification process in the course recommendation process, according to an embodiment of the present disclosure.
FIG. 22 is a diagram illustrating a course storage process in an installation process of a laundry treatment apparatus, according to an embodiment of the present disclosure.
FIG. 23 is a diagram illustrating a state in which the options of a course are changed in a laundry treatment apparatus through an external device, according to an embodiment of the present disclosure.
FIG. 24 is a diagram illustrating a state in which default setting values of the options of a course provided by a laundry treatment apparatus are changed, according to an embodiment of the present disclosure.
FIG. 25 is a flowchart illustrating an operation method of a system, according to an embodiment of the present disclosure.

### [Mode for Disclosure]

Hereafter, the present disclosure is described in detail with reference to the drawings. For clear and brief description of the present disclosure, parts not related to the description are not shown in the drawings and the same or similar components are indicated by the same reference numerals throughout the specification.

Terms "module" and "unit" that are used for components in the following description are used only for the convenience of description of the specification without having specifically important meanings or functions. Accordingly, the terms "module" and "unit" may be used in combination.

It should be understood that the terms "comprises" or "have" used in the specification specify the presence of stated features, numerals, steps, operations, components, parts, or a combination thereof, but do not preclude the presence or addition of one or more other features, numerals, steps, operations, components, parts, or a combination thereof.

Further, in the specification, terms such as first and second may be used to describe various components, but these components are not limited to the terms. These terms are used only to distinguish a component from other components.

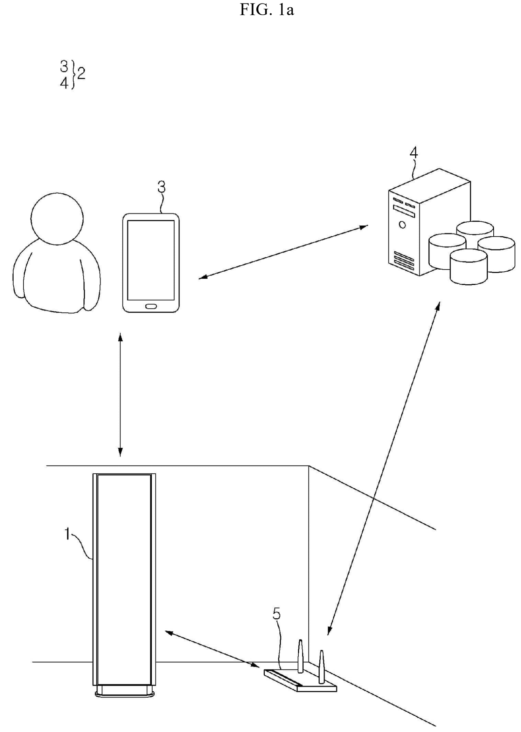

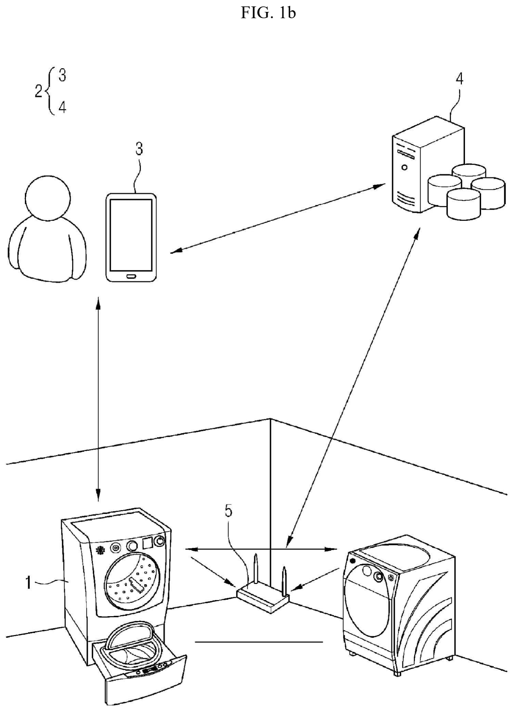

FIGS. 1a and 1b are diagrams schematically illustrating a system that includes a home appliance and an external device, according to various embodiments of the present disclosure.

Referring to FIGS. 1a and 1b, in an embodiment of the present disclosure, a system may include an external device 2 together with a home appliance 1. The external device 2 may be disposed outside the home appliance 1, and the home appliance 1 may be configured to be able to communicate with the external device 2.

In various embodiments of the present disclosure, terms such as home appliance, electronic device, and electronic equipment may be used interchangeably. In the present disclosure, an air conditioner and a laundry treatment apparatus are described as examples of the home appliance 1, but the present disclosure is not limited thereto.

The home appliance 1 can communicate with the external device 2 through a communication unit provided therein. The communication unit of the home appliance 1 can communicate with the external device 2 by directly transmitting and receiving signals, or can communicate with the external device 2 through a communication device 5 that is disposed outside the home appliance 1 and is capable of communicating with the external device 2.

A control unit of the home appliance 1 may be electrically connected to the communication device 5, and the electrical connection may include a wireless method and a wired method. For example, the control unit can perform information exchange with the external device 2 by communicating with the communication device 5 through a wireless method.

The external device 2 may include various devices. For example, the external device 2 may include a terminal 3 such as a mobile phone or computer provided to a user, and may include a server 4 that communicates with the terminal 3 and the communication device 5.

Accordingly, a user can provide various pieces of information to the home appliance 1 or deliver commands to the home appliance 1 using the external device 2. For example, a user can change settings of the home appliance 1 or command execution of modes using the terminal 3 or the server 4. In the present disclosure, the terms mode and course may be used interchangeably.

Meanwhile, in an embodiment of the present disclosure, the external device 2, as described below, is provided outside the home appliance 1 and can determine an optimized mode (hereinafter referred to as a customized mode) for a user on the basis of information provided from the user among a plurality of modes.

Further, a mode group including the customized mode among a plurality of modes and provided to the user through the home appliance 1 may be determined. The mode group may include at least one or more modes including the customized mode. The customized mode and the mode group will be described in detail below.

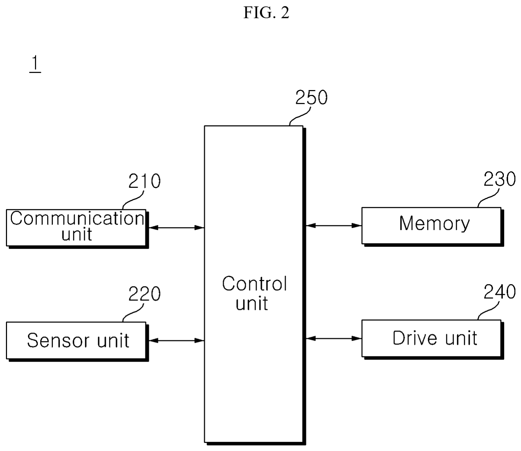

FIG. 2 is a block diagram of a home appliance according to an embodiment of the present disclosure.

Referring to FIG. 2, the home appliance 1 may include a communication unit 210, a sensor unit 220, a memory 230, a drive unit 240, and/or a control unit 250.

The communication unit 210 may include at least one communication module. For example, the communication method of the communication unit 210 may be a wired communication method such as a communication method using a power line or a serial communication method (e.g., RS-485 communication), or a wireless communication method such as Wi-Fi, Bluetooth, Beacon, or Zigbee.

The communication unit 210 can transmit and receive data to and from an external device. For example, the communication unit 210 may connect to a server connected to an external network and transmit and receive data.

The sensor unit 220 may include at least one sensor and may transmit data on detection values detected through the sensor to the control unit 250. For example, when the home appliance 1 is an air conditioner, the sensor unit 220 may include a heat exchanger temperature sensor detecting the temperature of an indoor heat exchanger, a pipe temperature sensor detecting the temperature of refrigerant flowing through pipes, a pressure sensor detecting the pressure of gaseous refrigerant flowing through pipes, an indoor temperature sensor detecting indoor temperature, and an indoor humidity sensor detecting indoor humidity.

The memory 230 can store data regarding reference values related to the operation of each component provided in the home appliance 1.

The memory 230 can store programs for signal processing and control within the control unit 250, and can store processed data and data to be processed. For example, the memory 230 can store applications designed for performing various tasks that can be processed by the control unit 250, and upon request from the control unit 250, can selectively provide some of the stored applications.

The memory 230 may include, for example, at least one of a volatile memory (e.g., DRAM, SRAM, SDRAM) or a non-volatile memory (e.g., flash memory, Hard Disk Drive (HDD), and Solid-State Drive (SSD)).

The drive unit 240 can drive a configuration corresponding to the type of the home appliance 1. For example, when the home appliance 1 is an air conditioner, the drive unit 240 may include a fan drive unit that drives the fan provided in the air conditioner and a compressor drive unit that drives the compressor provided in an outdoor unit. For example, when the home appliance 1 is a laundry treatment apparatus, the drive unit 240 may include a drum drive unit that rotates a drum in which laundry is accommodated.

The control unit 250 can control the overall operation of the home appliance 1. The control unit 250 may be connected to each component provided in the home appliance 1, and can transmit and/or receive signals to and from the components and control their overall operations.

The control unit 250 may include at least one processor and can control the overall operation of the home appliance 1 using the processor included therein. In this configuration, the processor may be a general-purpose processor such as a central processing unit (CPU). Of course, the processor may be a dedicated device such as an ASIC or another hardware-based processor.

The control unit 250 can acquire data related to each component provided in the home appliance 1. In this case, the control unit 250 can also acquire data related to each component provided in the home appliance 1 at time intervals according to a predetermined period, taking into account the computational load.

The control unit 250 can perform various operations on the basis of the acquired data and can control the overall operation of each component provided in the home appliance 1 according to the result of the operations.

Meanwhile, the home appliance 1 may further include an input device (not shown) capable of receiving user input. For example, when the home appliance 1 receives a user input through the input device (e.g., a touch panel or key), it can perform an operation corresponding to the user input.

The home appliance 1 may further include an output device (not shown) that outputs messages regarding the operation state of the home appliance 1. For example, the output device may include a display, a visual indicator such as a Light Emitting Diode (LED), and/or an audio device such as a speaker or buzzer.

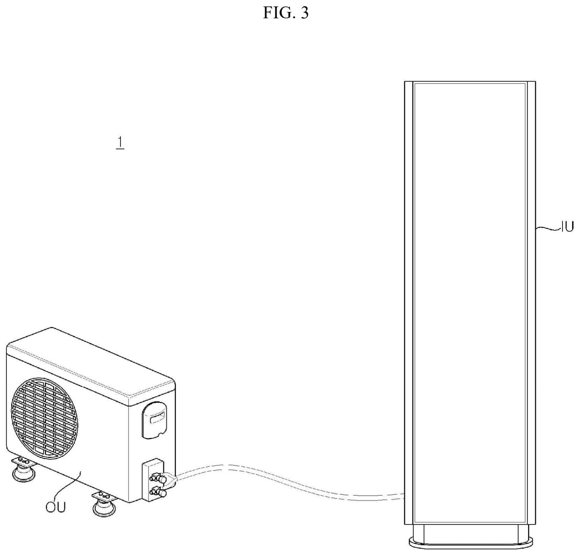

FIG. 3 is a diagram illustrating an example of the configuration of an air conditioner that is an example of a home appliance according to an embodiment of the present disclosure.

Referring to FIG. 3, an air conditioner 1 according to an embodiment of the present disclosure may include an outdoor unit OU and an indoor unit IU connected to the outdoor unit OU. The indoor unit IU may be, for example, any one of a stand-type air conditioner, a wall-mounted air conditioner, and a ceiling-type air conditioner, but the stand-type indoor unit IU is illustrated in the figure by way of example.

Meanwhile, the air conditioner 1 may further include at least one of a ventilation device, an air purifier, a humidifier, and a heater, and may operate in conjunction with the operation of the indoor unit IU and the outdoor unit OU.

The outdoor unit OU may include a compressor (not shown) that receives and compresses refrigerant, an outdoor heat exchanger (not shown) that exchanges heat between the refrigerant and outdoor air, an accumulator (not shown) that extracts gaseous refrigerant from the supplied refrigerant and supplies it to the compressor, and a four-way valve (not shown) that selects a refrigerant flow path according to heating operation. Further, the outdoor unit OU may further include multiple sensors, valves, and oil return devices.

The outdoor unit OU can compress refrigerant or exchange heat in accordance with settings by operating the provided compressor and outdoor heat exchanger, and can supply the refrigerant to the indoor unit IU. The outdoor unit OU may be driven by a remote controller (not shown) or by the demand of the indoor unit IU. In this configuration, as cooling/heating capacity varies in response to the indoor unit IU that is driven, the number of operating outdoor units and the number of operating compressors installed in the outdoor units may also vary.

In this case, the outdoor unit OU can supply compressed refrigerant to the connected indoor unit IU.

The indoor unit IU can receive refrigerant from the outdoor unit OU and discharge cooled or heated air into a room.

The indoor unit IU may include an indoor heat exchanger (not shown), an indoor unit fan (not shown), an expansion valve (not shown) through which refrigerant that is supplied expands, and multiple sensors (not shown).

The indoor unit IU may include a drain pan (not shown) that is disposed adjacent to the indoor heat exchanger and collects water generated by heat exchange in the indoor heat exchanger, and a drain pipe (not shown) that discharges water collected in the drain pan to the outside.

In this case, the outdoor unit OU and the indoor unit IU may be, for example, connected through a communication line and can transmit and receive data to and from each other, and the outdoor unit OU and the indoor unit IU may be connected to a remote controller (not shown) through wired or wireless connection and may operate under the control of the remote controller (not shown).

The remote controller (not shown) may be, for example, connected to the indoor unit IU, and may transmit user control commands to the indoor unit IU and receive and display status information of the indoor unit IU. In this case, the remote controller can communicate with the indoor unit IU through wired or wireless communication depending on the form of connection.

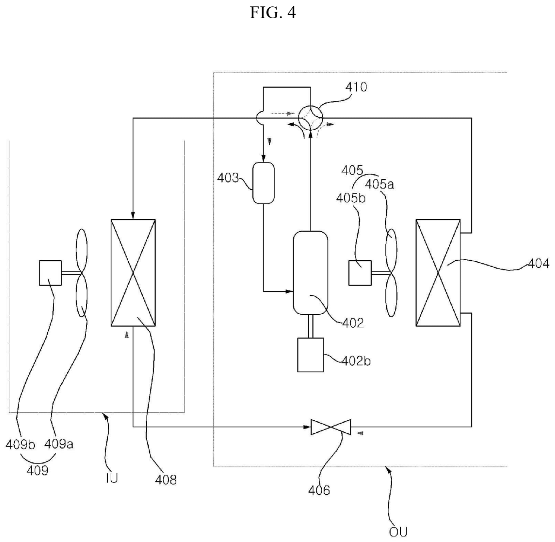

FIG. 4 is a schematic diagram of an outdoor unit and an indoor unit according to an embodiment of the present disclosure.

Referring to FIG. 4, the outdoor unit OU may include a compressor 402 that serves to compress refrigerant, a compressor motor 402b that drives the compressor 402, an outdoor heat exchanger 404 that serves to dissipate heat from the compressed refrigerant, an outdoor blower 405 that is composed of an outdoor fan 405a disposed at a side of the outdoor heat exchanger 404 and promoting heat dissipation of the refrigerant and a motor 405b rotating the outdoor fan 405a, an expansion valve 406 that expands condensed refrigerant, a cooling/heating switching valve 410 that changes the flow path of the compressed refrigerant, an accumulator 403 that temporarily stores vaporized refrigerant, removes moisture and foreign substances, and then supplies refrigerant at a predetermined pressure to the compressor, etc.

The expansion valve 406 may be, for example, an electronic expansion valve (EEV).

The indoor unit IU may include an indoor heat exchanger 408 that is disposed indoors and performs cooling/heating functions, and an indoor blower 409 that is composed of an indoor fan 409a disposed at a side of the indoor heat exchanger 408 and promoting heat dissipation of the refrigerant and a motor 409b rotating the indoor fan 409a.

At least one indoor heat exchanger 408 may be installed. The compressor 402 may be, for example, at least one of an inverter compressor and a constant-speed compressor.

Further, the air conditioner 1 may be configured as a cooling unit that cools an indoor space or may be configured as a heat pump that cools or heats an indoor space.

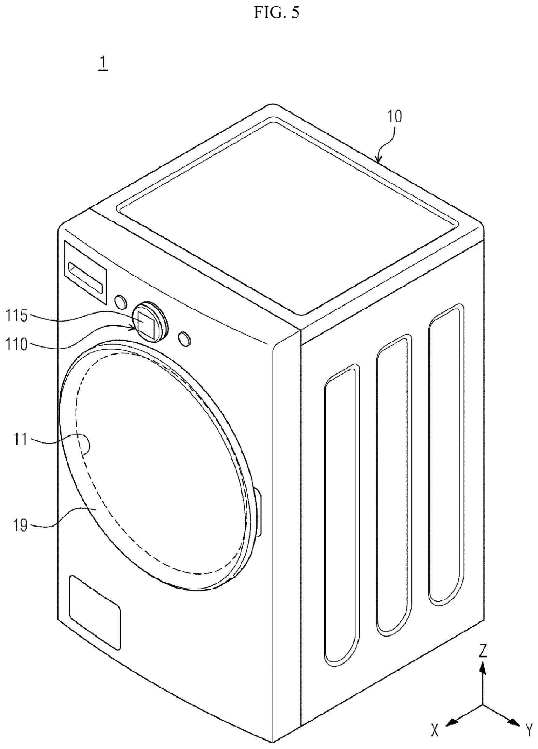

FIG. 5 is a perspective view illustrating the exterior of a laundry treatment apparatus that is an example of a home appliance according to an embodiment of the present disclosure.

Referring to FIG. 5, a laundry treatment apparatus 1 includes a cabinet 10. The cabinet 10 forms the exterior of the laundry treatment apparatus 1, and a space is defined inside in which components such as a drum 20, which will be described below, are accommodated.

The cabinet 10 may have various shapes as needed, such as a polygonal column or a cylindrical column. As illustrated in FIG. 5, when the cabinet 10 has a rectangular box shape, the cabinet 10 may be formed by joining a plurality of panels or may be formed by integrally molding and bending the plurality of panels.

When the cabinet 10 includes a plurality of panels, the plurality of panels may include at least some of a front panel, a rear panel, a top panel, a bottom panel, and a pair of side panels.

A laundry inlet 11 for introducing laundry into the interior may be formed in the cabinet 10. The laundry inlet 11 may be an inlet formed on one side of the cabinet 10 for a user to introduce laundry into the cabinet 10.

The laundry inlet 11 may be formed in the front panel or the top panel of the cabinet 10. That is, according to an embodiment of the present disclosure, the laundry inlet 11 may be formed in the front panel to provide a front-loading type or may be formed in the top panel to provide a top-loading type.

Although the laundry treatment apparatus 1 of a front-loading type in which the laundry inlet 11 is formed in the front panel of the cabinet 10 is illustrated in FIG. 5, it may alternatively adopt a top-loading type as needed.

Meanwhile, the cabinet 10 may be provided with a laundry door 19 for opening and closing the laundry inlet 11. The laundry door 19 may be provided on the cabinet 10 in various ways capable of opening and closing the laundry inlet 11. A configuration in which the laundry door 19 is hinge-coupled to the cabinet 10 so that one side can rotate in accordance with an embodiment of the present disclosure is illustrated in FIG. 5

The laundry door 19 can determine opening and closing of the laundry inlet 11 by rotating about a hinge. For example, the laundry door 19 can open the laundry inlet 11 by rotating about the hinge away from the cabinet 10 and can close the laundry inlet 11 by rotating about the hinge toward the cabinet 10.

Meanwhile, the cabinet 10 may be provided with a door lock for locking the laundry door 19. The door lock can fix the laundry door 19 so that the laundry door 19 keeps the laundry inlet 11 closed.

An embodiment of the present disclosure may include a control unit 80, and the control unit 80 is electrically connected to the door lock and can control the closed state of the laundry door 19 by controlling the operating state of the door lock. The control unit 80 may correspond to the control unit 250 of FIG. 2.

For example, the door lock is controlled by the control unit 80, so it can fix the laundry door 19 in a locked state to prevent the laundry door 19 in a closed state from changing to an open state. When the locked state of the door lock is released, the laundry door 19 may be rotated automatically to open the laundry inlet 11 or may be freely operated by a user to be opened. The control unit 80 is described in detail below.

Meanwhile, the cabinet 10 may be provided with an input/output unit 110. The input/output unit 110 may include an input unit and/or an output unit. The input unit can generate an input signal by being operated by a user, and the output unit can provide various pieces of information to a user in accordance with output signals from the control unit 80.

The input unit and the output unit may be positioned together or may be positioned separately from each other. A plurality of input units and a plurality of output units may be provided, and they may be disposed at various positions on the cabinet 10.

An input/output unit 110 in which an input unit and an output unit are disposed together in accordance with an embodiment of the present disclosure is illustrated in FIG. 5. In FIG. 5, the input/output unit 110 is disposed above the laundry door 19 on the front panel, but the position of the input/output unit 110 may vary depending on need.

The output unit may include a display unit 115 on which a screen is displayed to provide visual information to a user. The output unit may include a display on which a screen is displayed and a screen bezel surrounding the display.

The display unit 115 is connected to the control unit 80 and can output a screen that provides necessary information to a user through the display. Further, the output unit may further include a speaker for providing an audio signal, such as various notification sounds, to a user.

Meanwhile, the input unit can generate various input signals by being operated by a user. For example, the input unit may include at least one or more buttons that are physically operated by a user, a touch panel that detects a user's touch when contacted by the user's hand or the like, and a microphone that receives a voice signal or the like from the user.

For reference, in the present disclosure, the term "button" includes a mechanical button that causes a physical change when operated by a user and a touch button that generates an electrical signal when contacted by the user's hand or the like. That is, in the present disclosure, the button may be implemented in various types and shapes as needed.

The touch panel may be provided on the display unit 115 to detect a user's touch on a screen or the like, and may also be provided on the front panel in addition to the display unit 115.

The input unit may include a power button. When the power button is operated, power can be supplied to various components included in the laundry treatment apparatus 1.

The laundry treatment apparatus 1 according to an embodiment of the present disclosure may maintain a standby state or a sleep state in which it connected to external power but the power is not supplied to the remaining components excluding certain components.

When the power button is operated in the sleep state, power is supplied to the remaining components, and the apparatus can transition to a power-on state or a wake-up state to prepare for performing a laundry treatment course.

An embodiment of the present disclosure may include a power standby unit that continuously receives power from external power regardless of the standby state and the power-on state, and the power standby unit may be configured to allow power to be supplied to other components such as the control unit 80 when the power button is operated in the sleep state.

However, if necessary, the entire configuration of the laundry treatment apparatus 1 may be designed to switch between a power-off state and a power-on state without the power standby unit.

The input unit may include a start button. The start button may be defined as a pause button. An embodiment of the present disclosure can perform various courses for treating laundry accommodated inside the drum 20 through control of the control unit 80. A user can command the start or pause of a course by operating the start button.

The input unit according to an embodiment of the present disclosure may include, as needed, various buttons for user convenience in addition to the plurality of buttons mentioned above.

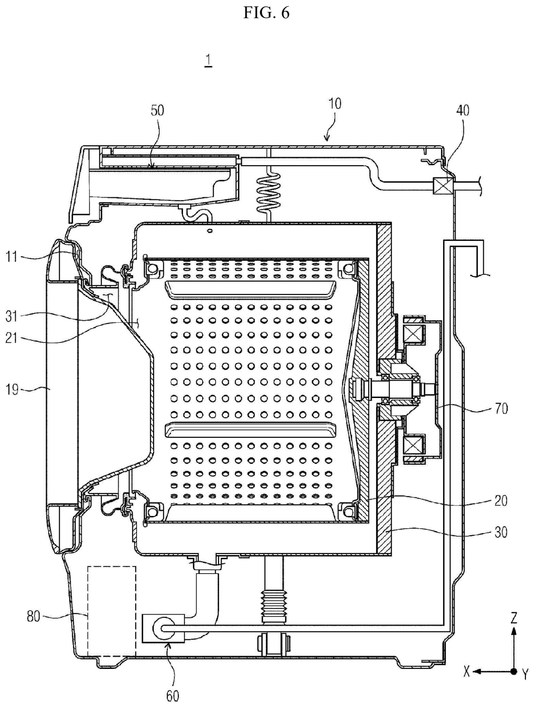

Meanwhile, a laundry treatment apparatus 1 according to an embodiment of the present disclosure that includes a tub 30 and a detergent unit 50 and is capable of performing a course for washing laundry is illustrated in FIG. 6.

Referring to FIG. 6, when the laundry treatment apparatus 1 according to an embodiment of the present disclosure performs a washing course for laundry and the like, the laundry treatment apparatus 1 may include a tub 30 and a detergent unit 50.

The tub 30 may be provided inside the cabinet 10, may have a space in which water is accommodated, and may have various shapes. A tub opening 31 facing the laundry inlet 11 of the cabinet 10 may be formed on one side of the tub 30.

For example, the tub 30 may have a cylindrical shape having a space therein, and the front of the tub 30 may include the tub opening 31 facing the laundry inlet 11. Laundry introduced through the laundry inlet 11 can be introduced into the tub 30 through the tub opening 31.

The drum 20 may be provided in the tub 30. The drum 20 may have various shapes in which a space is formed. The drum 20 may be provided to be rotatable by the drive unit 70.

The drum 20 may have a drum opening 21 formed on a side facing the tub opening 31. For example, the front of the drum 20 may include the drum opening 21 facing the tub opening 31. The inside of the drum 20 may be in communication with the outside through the drum opening 21, the tub opening 31, and the laundry inlet 11.

Laundry introduced into the laundry inlet 11 by a user can be accommodated into the drum 20 through the laundry inlet 11, the tub opening 31, and the drum opening 21. The laundry inlet 11, the tub opening 31, and the drum opening 21 may be aligned in a direction parallel to the rotational shaft of the drum 20.

Since laundry is accommodated in the drum 20, the drum 20 may be defined as an accommodating unit in the present disclosure. That is, the laundry treatment apparatus 1 according to an embodiment of the present disclosure may include the drum 20 or the accommodating unit.

The drum 20 may have a circular cross-section to facilitate rotation about its rotational shaft. For example, the drum 20 may be provided in a cylindrical shape. Further, a plurality of through-holes may be formed in the circumferential surface of the drum 20.

Water in the tub 30 flows into the drum 20, which is installed in the tub 30 for storing water, through the through-holes, whereby water can be provided to laundry.

The rotational shaft of the drum 20 is connected to the drive unit 70 and can receive rotational force. That is, the laundry treatment apparatus 1 according to an embodiment of the present disclosure may include a drive unit 70 that rotates the drum 20.

The drive unit 70 may be provided outside the tub 30, and a rear of the drum 20 may be connected to the rotational shaft. The drive unit 70 may be directly connected to the rotational shaft or indirectly connected through a belt or the like.

In an embodiment of the present disclosure, the laundry treatment apparatus 1 can perform a course for treating laundry by rotating the drum 20 using the drive unit 70. The control unit 80, which will be described below, can perform the course by controlling rotation of the drum 20 by controlling the drive unit 70.

Meanwhile, an embodiment of the present disclosure may include a water supply unit 40. The water supply unit 40 is connected to an external water source provided outside the cabinet 10, for example, a municipal water supply, and can supply water into the cabinet 10.

The water supply unit 40 may include a water supply valve for regulating the flow of water, and water entering from outside the cabinet 10 flows along a water supply pipe, so it can be directly supplied into the tub 30 or supplied to the detergent unit 50.

The detergent unit 50 can store detergent and supply the detergent into the tub 30 or the drum 20. The detergent unit 50 can supply the detergent into the tub 30 through a detergent pipe connected to the tub 30.

When the water supply pipe is connected to the detergent unit 50, the detergent unit 50 can supply both water supplied through the water supply pipe and detergent into the tub 30 through the detergent pipe.

Meanwhile, an embodiment of the present disclosure may include a drainage unit 60. The control unit 80 can perform a drainage process by controlling the drainage unit 60 to discharge water in the tub 30 to the outside during a washing course and the like.

The drainage unit 60 may include a drainage pipe connected to the tub 30 for water in the tub 30 to flow outside, may include a drainage valve for regulating the flow of water in the drainage pipe, and may include a drainage pump for generating the flow of water in the drainage pipe.

Meanwhile, an embodiment of the present disclosure may include a control unit 80. The control unit 80 may be electrically connected to various power-consuming components to control the operation of each component. The control unit 80 may be divided into a plurality of units as needed and may include various detailed configurations.

For example, the control unit 80 may functionally include a communication unit for communication with external or other components, a storage unit for storing information, and a processing unit for processing information. Further, the control unit 80 may include a sub-control unit 80 provided for each component and a main control unit 80 that is electrically connected to the sub-control unit 80 and is responsible for controlling the sub-control unit 80.

As described above, detailed configurations of the control unit 80 divided by function or component may be spatially separated from each other, and at least some of them may be spatially and functionally integrated as needed.

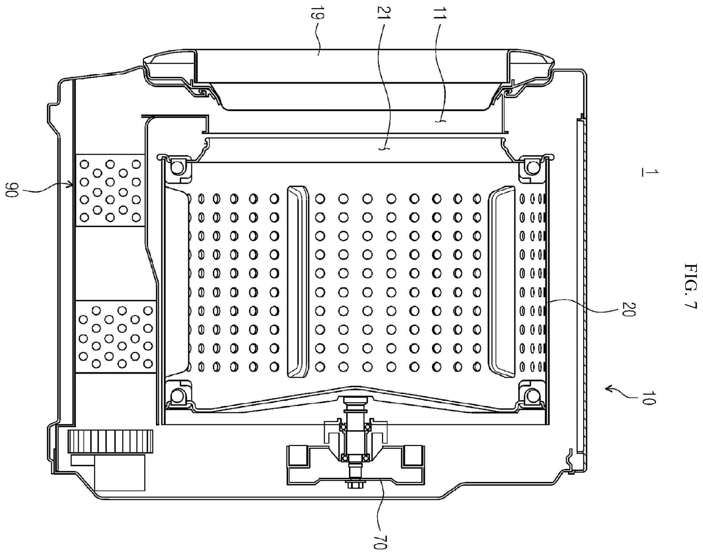

Meanwhile, a laundry treatment apparatus 1 capable of performing a course for drying laundry in accordance with an embodiment of the present disclosure is illustrated in FIG. 7. In the laundry treatment apparatus 1 that performs a drying course for laundry, the components for washing laundry, such as the tub 30 and the detergent supply unit 50 described above, may be omitted.

Referring to FIG. 7, the laundry treatment apparatus 1 for drying laundry may include the drum 20 described above, that is, an accommodating unit for laundry, and the accommodating unit may be provided to be rotatable in the cabinet 10. The drive unit 70 may be positioned at one side of the cabinet 10 and may be connected to the drum 20 itself or to the rotational shaft of the drum 20, whereby it can provide rotational force to the drum 20.

Meanwhile, an air treatment unit 90 for supplying high-temperature dry air to the laundry in the drum 20 may be provided in the cabinet 10. The air treatment unit 90 may be provided in various forms.

For example, the air treatment unit 90 may be configured to heat air by consuming electric energy using a Peltier element, or to heat air by forming an electromagnetic field to heat the drum 20 made of metal, or to heat and dehumidify air by including a heat pump system using refrigerant.

An air treatment unit 90 provided on a base disposed below the drum 20 is illustrated in FIG. 7. The air treatment unit 90 of FIG. 7 corresponds to a circulation-type air treatment unit that is provided outside the drum 20 to supply dehumidified and heated air into the drum 20 and into which air that has passed through the drum 20 is returned.

Referring to FIG. 7, the air treatment unit 90 may include an air passage that is in communication with the inside of the drum 20. In side the drum 20, there is air containing steam generated by evaporation of moisture present in laundry, and the air inside the drum 20 can be discharged from the drum 20 and can flow into the air passage.

For example, air tat is discharged from the inside of the drum 20 to the outside of the drum 20 through the drum opening 21 may flow into the air passage and move along the air passage in the air treatment unit 90.

The air treatment unit 90 may include a dehumidifying unit. The dehumidifying unit can condense moisture in the air by cooling the air through contact with the air flowing along the air passage.

Moisture condensed in the dehumidifying unit can be separated from the air, so the air flowing along the air passage can be dehumidified such that the moisture is significantly reduced as it passes through the dehumidifying unit.

The air treatment unit 90 may include a heating unit. The heating unit can heat the air through direct contact or thermal contact with the air flowing along the air passage. The air flowing along the air passage can be heated and dried as it passes through the dehumidifying unit and the heating unit.

The air treatment unit 90 may include a fluid system including a fluid that passes through the dehumidifying unit and the heating unit. The fluid system may include a compressor, a condenser, a diffuser valve, and an expansion device, in which the dehumidifying unit may correspond to the expansion device and the heating unit may correspond to the condenser.

However, the air treatment unit 90 in an embodiment of the present disclosure is not limited to including the fluid system, and the dehumidifying unit and the heating unit may be implemented in various ways.

The air treatment unit 90 may include an air fan. The air fan may be positioned in a space that is in communication with the air passage, for example, in the air passage, and can generate airflow. By the operation of the air fan, the air inside the drum 20 can circulate while flowing through the air passage.

That is, in an embodiment of the present disclosure, the air treatment unit 90 dehumidifies and heats the air flowing along the air passage that is in communication with the inside of the drum 20, and supplies the air back into the drum 20, whereby it is possible to remove moisture contained in laundry by providing hot and dry air into the drum 20.

Meanwhile, the air treatment unit 90 is not necessarily limited to the air circulation type described above. For example, the air treatment unit 90 may be an exhaust type that introduces air from outside the cabinet 10 and supplies it into the drum 20, and discharges the air in the drum 20 to the outside, or may be a static type that heats and dehumidifies the air inside the drum 20 without causing airflow.

Meanwhile, as illustrated in FIGS. 6 and 7, the laundry treatment apparatus 1 according to an embodiment of the present disclosure is not necessarily configured to perform only any one of a washing course or a drying course.

For example, in an embodiment of the present disclosure, the laundry treatment apparatus 1 may include the water supply unit 40, the tub 30, the detergent unit 50, and the like to be able to perform a washing course for laundry, and may also include the air treatment unit 90 to be able to perform a drying course.

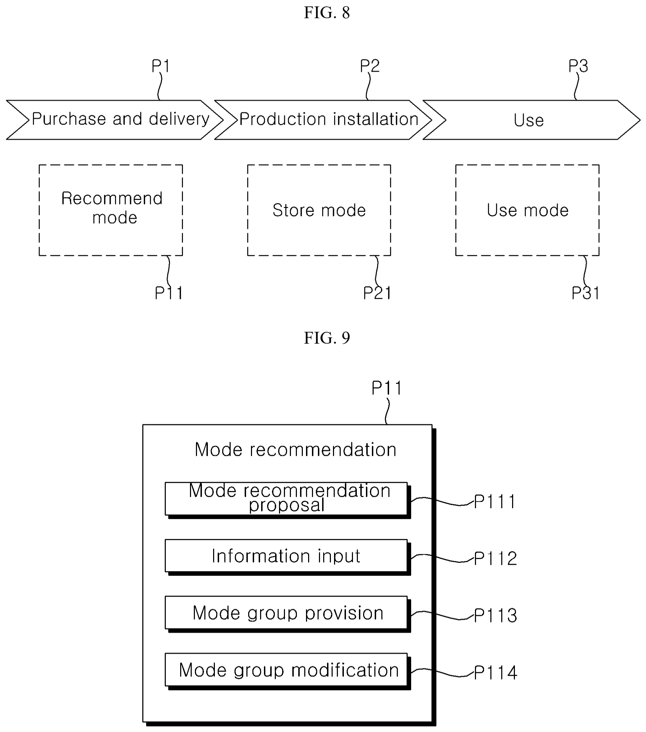

FIG. 8 is a conceptual diagram illustrating a process from the purchase of a home appliance to its use by a user, according to an embodiment of the present disclosure.

In a purchase and delivery process P1, a user can proceed with a purchase of a home appliance 1 in various ways, and after the purchase, the seller of the home appliance 1 can deliver the home appliance 1 to the user in various ways. According to an embodiment of the present disclosure, in the purchase and delivery process P1, a mode recommendation process P11, in which a mode to be provided to the user through the home appliance 1 is determined, may be performed.

For example, before the home appliance 1 is installed to be able to perform a mode in an embodiment of the present disclosure, the external device 2 described above may receive information from the user through an input process P112 in which the user provides information, and may determine a customized mode.

After the purchase and delivery process P1, an installation process P2 of the home appliance 1 may be performed. In the installation process P2, the home appliance 1 may be installed to be usable at a user-requested installation location.

In the installation process P2, a mode storage process P21 of the home appliance 1 may be performed. In the mode storage process P21, power is supplied to the home appliance 1, so communication between the control unit 250 and the external device 2 or the communication device 5 described above can be allowed.

In the initial communication process of the control unit 250 as described above, the mode storage process P21 may be performed. The control unit 250 can receive and store mode group information from the external device 2.

After the installation process P2, a use process P3 of the home appliance 1 by the user may be performed. In the use process P3, the control unit 250 can provide modes belonging to the mode group on the basis of the stored mode group information so that the user can select them individually.

In this case, the control unit 250 controls the output unit described above to output the modes of the mode group so that the user can recognize them, and the user can select any one of the modes belonging to the mode group and command execution of the mode.

According to an embodiment of the present disclosure, before the home appliance 1 is provided to a user, modes necessary or suitable for the user are preset in the home appliance 1, whereby it is possible to improve user convenience.

Further, according to an embodiment of the present disclosure, multiple modes may be prepared in advance for a user, and among the plurality of modes, modes suitable for the user may be conveniently classified and provided to the user.

Moreover, a user does not need to individually identify multiple modes or directly classify suitable modes among the plurality of modes in the use process P3 of the home appliance 1, so user convenience can be improved.

Meanwhile, the home appliance 1 may be shipped with a basic mode previously stored among a plurality of modes before being installed to be usable at a installation site. That is, the basic mode may be a mode that can be basically provided to the home appliance 1 regardless of a customized mode that is determined by the external device 2.

The basic mode may be set to be undeletable from the home appliance 1. For example, a user can change the types of modes stored in the home appliance 1 using the input device of the home appliance 1 or the terminal 3, but the basic mode may be a mode that cannot be deleted by a user.

At least one or more modes other than the basic mode may be previously stored in the control unit 250 of the home appliance 1 from the time of product shipment. In other words, a plurality of initial modes previously stored before installation among a plurality of modes may be stored in the control unit 250, and the plurality of initial modes may include a basic mode.

Accordingly, the control unit 250 can provide initial modes including a basic mode to a user even though a customized mode is not received from the external device 2. That is, the control unit 250 can provide initial modes to a user such that the user can select the initial modes, after it is installed at an installation site without communication with the external device 2.

However, the control unit 250 may be configured such that the others of initial modes excluding a basic mode can be deleted by a user. For example, a user can add or delete the others of initial modes, previously stored in the home appliance 1, excluding a basic mode through an input device of the home appliance 1 or the terminal 3, but the basic mode may not be deleted by a user.

A plurality of customized modes may be determined by the external device 2, and the information on the mode group described above may be provided from the external device 2 to the home appliance 1 in various ways. That is, the mode update method of the home appliance 1 may vary.

For example, the home appliance 1 may have a basic mode stored from the time of shipment as described above, but may also receive and store information on a basic mode along with a customized mode when communication has established with the external device 2.

Alternatively, the external device 2 may determine a customized mode excluding a basic mode among a plurality of modes, and the home appliance 1 may receive and store only the information on the customized mode excluding the information on the basic mode.

Alternatively, the external device 2 may determine a customized mode among a plurality of modes including a basic mode. That is, some of a plurality of customized modes may be basic modes.

However, the home appliance 1 may receive and store information on the others of a plurality of customized modes excluding a basic mode previously stored in the control unit 250. In addition, the storage method of a customized mode and a basic mode in the home appliance 1 may vary.

Meanwhile, the mode recommendation process P11 for determining a customized mode for a user among various modes is conceptually illustrated in FIG. 9.

In an embodiment of the present disclosure, the external device 2 includes a terminal 3, into which information is input by a user, and a server 4 capable of communicating with the terminal 3, and a customized mode can be determined in the terminal 3 or the server 4 on the basis of information.

The mode recommendation process P11 may include at least one or more of a proposal process P111 for asking a user's intention whether to proceed with the determination of a customized mode through the external device 2, an input process P112 in which the user inputs information for determining a customized mode, a provision process P113 in which the customized mode is determined by the external device 2 on the basis of the information input by the user and is notified to the user, and a modification process P114 in which the user decides whether to reflect or modifies the customized mode, etc.

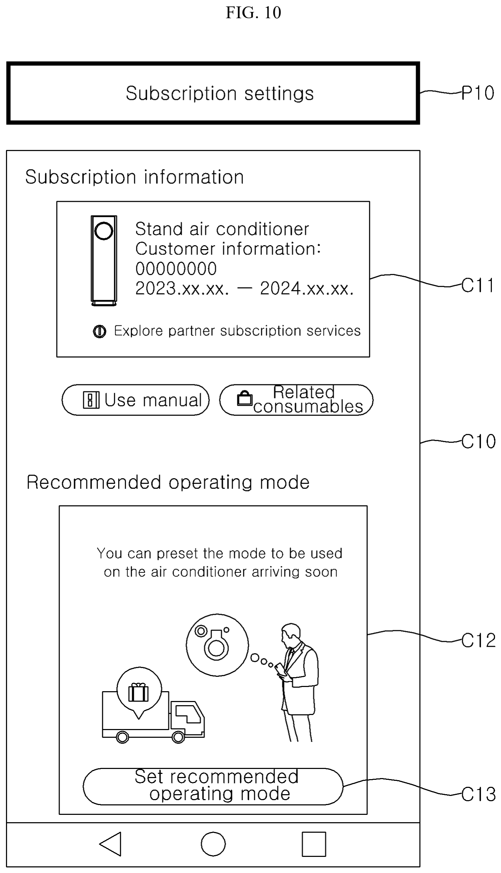

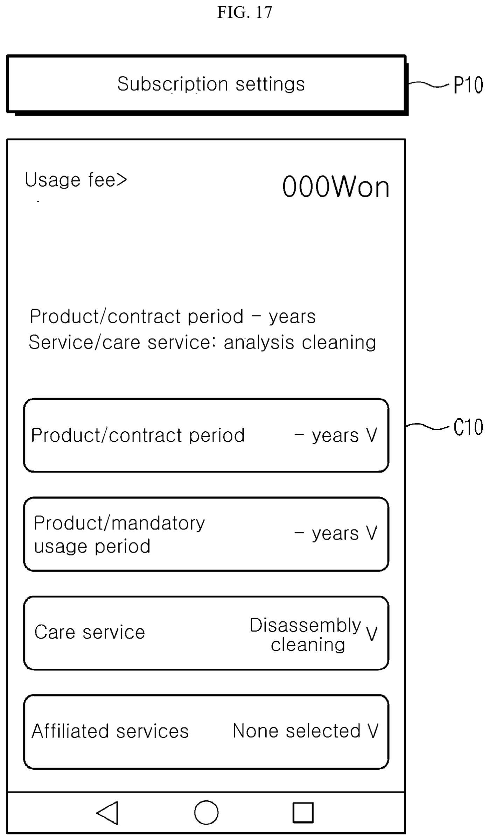

Hereafter, an air conditioner that is an example of the home appliance 1 is described with reference to FIGS. 10 to 16, and a laundry treatment apparatus that is another example of the home appliance 1 is described with reference to FIGS. 17 to 24. Detailed descriptions of contents duplicated in FIGS. 10 to 24 are omitted.

A subscription process P10 that can be performed in the purchase and delivery process P1 of the air conditioner 1 is illustrated in FIG. 10. In the subscription process P10, the external device 2 can provide a subscription screen C10 to a user to carry out the subscription process P10.

For example, the external device 2 may include a terminal 3 operable by a user and capable of displaying screens, and can provide the subscription screen C10 through the terminal 3.

In the subscription process P10, the user can set management services provided by the seller or others together with the purchase of the air conditioner 1. For example, in the subscription process P10, the user can select the management period, management method, etc. of the air conditioner 1 provided by the seller or others and enter into a contract with the seller or others.

After the purchase of the air conditioner 1 is confirmed, the user can proceed with the subscription process P10 through the external device 2 even before installation of the air conditioner 1. That is, the external device 2 may proceed with the subscription process P10 prior to the installation of the air conditioner 1, and the user can be provided with the subscription screen C10 through the terminal 3.

The subscription screen C10 can provide various pieces of information so that the user can decide the management period and management method described above, and information related to the subscription process P10 can be input by the user. For example, the subscription screen C10 may include a section C11 including user information, management period of the air conditioner 1, etc., and a section C12 related to the setting of a customized mode. In the section C12 related to the setting of a customized mode, an item C13 for initiating the setting of a customized mode may be displayed. In this configuration, when the user selects the item C13 for initiating the setting of a customized mode through the terminal 3, a suggestion process P111 of the mode recommendation process P11 can be performed.

For reference, the objects defined as items in the present disclosure are displayed on screens output through the display of the terminal 3 or the air conditioner 1, and a user can select corresponding items through the terminal 3 or an input device.

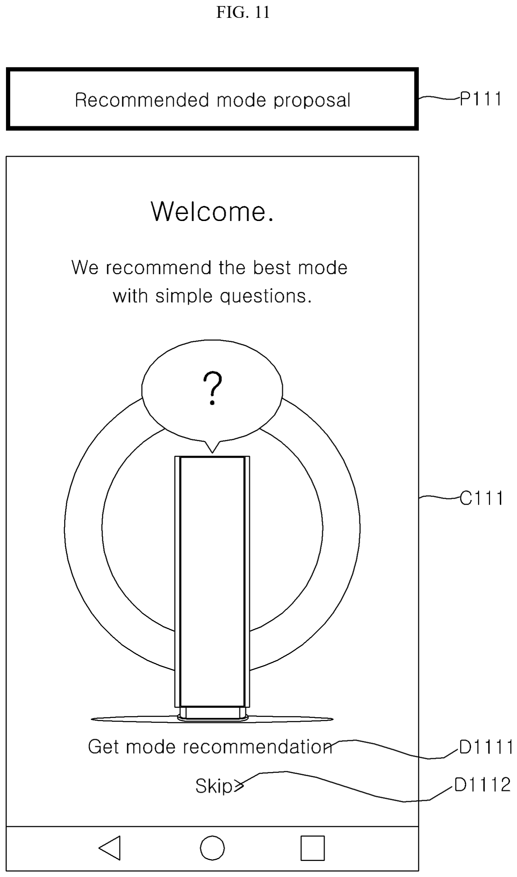

A screen corresponding to the proposal process P111 of the mode recommendation process P11 for determining a customized mode for a user and providing a mode group is illustrated in FIG. 11.

The external device 2 can perform the mode recommendation process P11 for providing a mode group including a customized mode to a user, and can output a proposal screen C111 in the proposal process P111 of the mode recommendation process P11.

A user can proceed with the mode recommendation process P11 through the external device 2 even before the delivery of the air conditioner 1 is completed, and can be provided with the proposal screen C111 through the terminal 3.

A phrase, which indicates that the user can be provided with a mode group for the user among multiple modes through the external device 2, to the user can be displayed on the proposal screen C111. A proposal acceptance item D1111 for deciding to proceed with the mode recommendation process P11 and a proposal rejection item D1112 for the user to ignore the mode recommendation process P11 can be displayed on the proposal screen C111.

The external device 2 or the control unit 250 can recognize user's commands depending on whether various items defined in the present disclosure are selected by the user.

For example, when the proposal acceptance item D1111 is selected by a user, the external device 2 can continue the mode recommendation process P11, and when the proposal rejection object D1112 is selected by a user, the external device 2 can skip the decision of a customized mode and terminate the mode recommendation process P11.

When a user commands skipping the mode recommendation process P11 by selecting the proposal rejection item D1112, the external device 2 can provide the user with a mode group including a basic mode or initial modes described above except for a customized mode without information for determining the customized mode provided from the user.

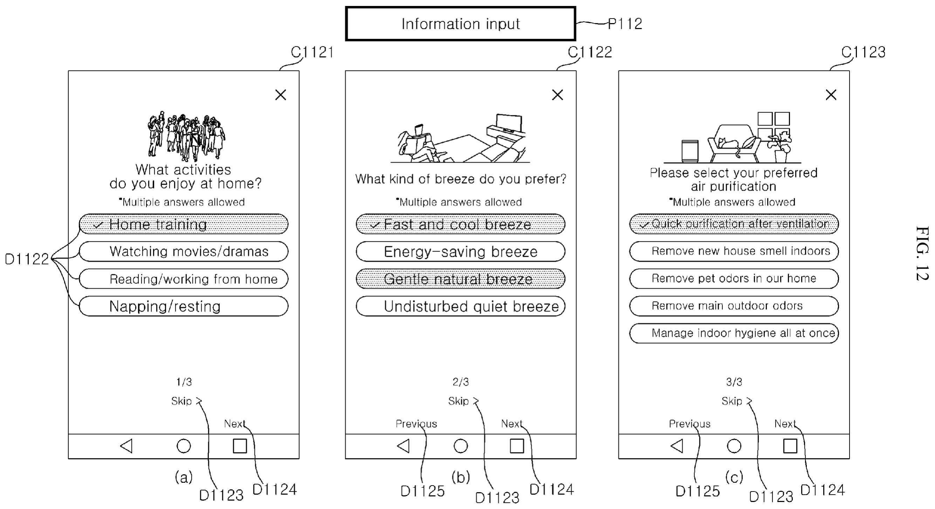

Meanwhile, input screens that are provided through the external device 2 in the input process P112 of the mode recommendation process in the purchase and delivery process P1 are illustrated in FIG. 12.

Referring to FIG. 12, in an embodiment of the present disclosure, the external device 2 can collect information that is provided by a user through the input process P112 in which the user inputs his or her information.

That is, information required by the external device 2 to determine a customized mode may be provided to the external device 2 through the input process P112 in which a user inputs information. In the input process P112, the external device 2 can provide the user with an input screen in which various items selectable by the user are displayed, and the user can input information by selecting any one of the various items.

That is, in the input process P112, information may be provided to the external device 2 by a user selecting at least one of a plurality of selection items D1122 that is provided to the user.

A plurality of input screens having different subjects is illustrated in FIG. 12. FIG. 12(a) is a first input screen C1121 in which user information on a first subject is input, FIG. 12(b) is a second input screen C1122 in which user information on a second subject is input, and FIG. 12(c) is a third input screen C1123 in which user information on a third subject is input.

The first input screen C1121, the second input screen C1122, and the third input screen C1123 are illustrated in FIG. 12, but, in the input process P112, the subjects on which a user provides information and the number of corresponding input screens may vary as needed.

In an embodiment of the present disclosure, the external device 2 can receive information input by a user in the input process P112 through an input screen. Information may be provided to the external device 2 through a plurality of input processes P112 in which a user inputs information.

Referring to FIG. 12(a), the input screen may include a survey section for informing a user of the subject of information. Phrases, figures, or the like to indicate the type of information requested from the user, that is, survey content may be displayed in the survey section.

The user can understand the type of information required to be input by recognizing the phrases and the like displayed in the survey section.

As an example of the present disclosure, the first input screen C1121 may display survey content related to activities that are performed indoors in the survey section.

Meanwhile, at least one or more selection items that a user can select can be displayed on an input screen. The selection items may correspond to information related to answers to survey content.

For example, a plurality of selection items may be displayed on an input screen, and the plurality of selection items D1122 may correspond to different information respectively. Each selection item may display a phrase corresponding to a respective information value, so a user can check the information value for each selection item.

The user can input information to the external device 2 by understanding the survey content and selecting a selection item corresponding to the information that the user intends to input. In the first input screen C1121, a user can understand the survey content related to activities that are performed indoors through the phrases in the survey section, and can select a selection item suitable for the user among a plurality of selection items D1122 corresponding to the activities that are performed indoors.

As described above, in an embodiment of the present disclosure, a subject requesting information from a user may not be a direct subject related to the mode, and the external device 2 can select a mode advantageous or necessary for the user among various modes through such a survey process and provide it to the user as a customized mode.

Meanwhile, in the input process P112 in which a plurality of selection items D1122 is provided to a user, the external device 2 can collect information through the objects selected by the user among the plurality of selection items D1122.

That is, as described above, the external device 2 can provide a user with screens on different subjects such as the first input screen C1121, the second input screen C1122, and the third input screen C1123, and the user can input information by selecting a plurality of selection items D1122 provided on each screen.

Further, the external device 2 can be provided with a plurality of pieces of information from a user through a plurality of input processes P112 in which the user inputs information, and can determine at least one or more customized modes on the basis of the plurality of pieces of information.

That is, on the basis of a plurality of different types of information collected during the input process P112, at least one or more customized modes to be recommended to a user can be determined from among a plurality of modes previously stored in the external device 2.

For example, a plurality of customized modes may be determined on the basis of any one of a plurality of pieces of information input by a user, and one customized mode may be determined on the basis of at least two or more pieces of information among a plurality of pieces of information.

A next item D1124, a previous item D1125, and/or a skip item D1123 may be displayed on an input screen. The next item D1124 may be an item for confirming the information input by a user by selecting any one of a plurality of selection items D1122.

For example, when a user selects a selection item suitable for the user among a plurality of selection items D1122 and then selects the next item D1124, the external device 2 may provide an input screen corresponding to the next subject after the current subject, or if it is the last survey, may terminate the input process P112.

When the previous item D1125 is selected, the external device 2 can output again the input screen that was output immediately before the current input screen output on the external device 2, for example, the terminal 3. For example, when the previous item D1125 is selected by a user on the second input screen C1122, the first input screen C1121 can be output again on the terminal 3, and the user can select again a selection item on the first input screen C1121.

When the skip item D1123 is selected, an input screen for the next subject may be provided with the input of information for the current subject omitted, or if it is the last input screen, the input process P112 may be terminated.

That is, when the skip item D1123 is selected by a user on an input screen, the external device 2 can exclude providing information related to the corresponding subject and proceed to the next process.

In the input process P112, the external device 2 can provide a plurality of input screens, and information can be input by a user multiple times. The plurality of input screens relate to different subjects, and information on various subjects can be collected from a user.

A first input screen C1121 for inputting indoor activities, a second input screen C1122 for inputting the types of wind preferred by a user, and a third input screen C1123 for inputting the types of air quality condition preferred by a user are illustrated in FIG. 12.

That is, in an embodiment of the present disclosure, the information that is input by a user may include indoor activities, the types of wind preferred by the user, the types of air quality condition preferred by the user, and the like.

In the first input screen C1121, a user can input information on indoor activities. In this case, the external device 2 can determine a home training mode, a home cinema mode, a study mode, a relaxation mode, etc. as customized modes on the basis of the information input through the first input screen C1121. For example, the home training mode may correspond to a case where a user is exercising indoors, and may be a mode in which a target temperature is set to 20°C, an air volume is adjustable, and an air direction is not adjustable. For example, the home cinema mode may correspond to a case where a user is watching a video indoors, and may be a mode in which a target temperature is set to 25°C, an air volume is set to the minimum level, and an air volume and an air direction are adjustable. For example, the study mode may correspond to a case where a user is studying indoors, and may be a mode in which a target temperature is set to 24°C, and an air volume and an air direction are not adjustable. For example, the relaxation mode may correspond to a case where a user is taking a rest indoors, and may be a mode in which a target temperature is set to 26°C, an air volume is adjustable, and an air direction is not adjustable.

In the second input screen C1122, a user can input information on the types of wind preferred by the user. In this case, the external device 2 can determine a quick mode, a save mode, a forest mode, a quiet mode, etc. as customized modes on the basis of the information that is input through the second input screen C1122. For example, the quick mode may be a mode that rapidly changes the indoor temperature and in which a target temperature is set to the lowest temperature, an air volume is set to the maximum level, and an air volume and an air direction are not adjustable. For example, the save mode may be a mode that minimizes power consumption while maintaining the performance of an air conditioner and in which a target temperature is set to 26°C, an air volume is adjustable, and an air direction is not adjustable. For example, the forest mode may be a mode that corresponds to a forest environment and in which a target temperature is set to 25°C, and an air volume and an air direction are not adjustable. For example, the quiet mode may be a mode that minimizes noise generation and in which a target temperature is set to 25°C, an air volume is set to the minimum level, and an air volume and an air direction are adjustable.

In the third input screen C1123, a user can input information on preferred air quality conditions. In this case, the external device 2 can determine a ventilation mode, a new house mode, a pet mode, a fine dust mode, etc. as customized mode on the basis of the information that is input through the third input screen C1123. For example, in each of the ventilation mode, the new house mode, the pet mode, and the fine dust mode, at least one of an air volume and an air direction may be set differently, and the adjustability of at least one of the air volume and the air direction may differ from one another.

An embodiment of the present disclosure, as described above, can collect information on user's lifestyle, environment, preferences, etc. from the external device 2 even before the air conditioner 1 is installed, can analyze an appropriate mode through the external device 2, and can provide it to the user.

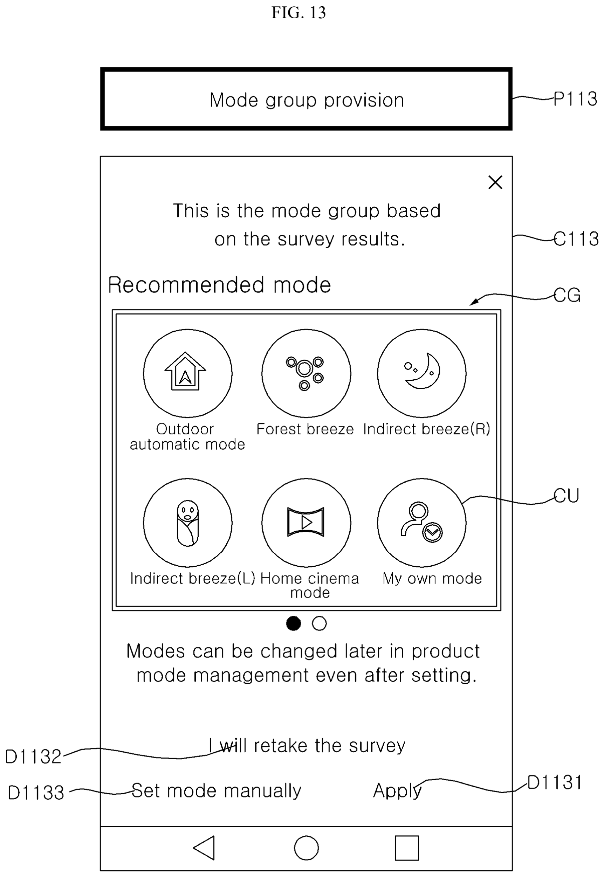

Meanwhile, a provision screen C113 in which modes belonging to a mode group are displayed through the external device 2 in a provision process P113 in which a mode group including a customized mode is provided to a user is illustrated in FIG. 13.

The external device 2 can determine a customized mode for a user on the basis of user's information input through the input process P112 described above, and can output a provision screen C113 for displaying a mode group CG including the customized mode in the provision process P113.

Accordingly, in an embodiment of the present disclosure, the mode group CG that is transmitted to the control unit 250 of the air conditioner 1 may include at least one or more customized modes. That is, the mode group CG may include a customized mode that is determined by the external device 2 on the basis of information provided from a user.

Through the input process P112, the external device 2 can determine a plurality of customized modes on the basis of information, and the mode group CG may include a plurality of customized modes.

The mode group CG may include customized modes from among a plurality of modes previously stored in the external device 2, and may be composed of modes determined to be suitable for the user through the external device 2.

The modes of the mode group CG may be displayed on the suggestion screen C111. In the provision process P113, the user can easily check which modes belong to the mode group CG suggested by the external device 2 through the provision screen C113.

Meanwhile, various modes stored in the external device 2 may include a user mode CU. The user mode CU may be a mode in which a user directly determines setting values for various options and stores them in the external device 2.

A mode determined by reflecting a user's intention may, by its nature, be included in the mode group CG to be provided by the air conditioner 1. That is, the mode group CG may include a user mode CU in which a user determines default setting values of options through the external device 2.

Meanwhile, the provision screen C113 may include at least one of a re-input item D1132, a direct setting item D1133, and an application item D1131. The re-input item D1132, the direct setting item D1133, and the application item D1131 may be displayed so that a user can select them.

When the re-input item D1132 is selected on the provision screen C113, the external device 2 can perform the above-described input process P112 again. That is, after the mode group CG is determined through the initial input process P112, when the re-input item D1132 is selected by the user and the input process P112 is performed again so that the user's information is provided again, the external device 2 can determine again a customized mode and a mode group CG on the basis of the re-provided information.

When the application item D1131 on the provision screen C113 is selected by the user, the external device 2 can determine that the user has consented to the mode group CG provided on the provision screen C113 being provided by the air conditioner 1.

Therefore, even when a mode group CG including a customized mode determined through the input process P112 is determined through the external device 2, in an embodiment of the present disclosure, the input process P112 and the provision process P113 may be repeatedly performed in accordance with a user's intention, whereby the mode group CG composed of modes desired by the user can be repeatedly determined and provided.

Meanwhile, when the direct setting item D1133 is selected on the provision screen C113, the external device 2 can terminate the mode recommendation process P11 while resetting the contents related to the currently determined mode group CG. That is, after the mode group CG is determined through the input process P112, the external device 2 can reset the mode group CG when the direct setting item D1133 is selected. Further, the external device 2 may be configured to provide a mode group CG composed of basic modes or initial modes or to transmit a mode group CG reconfigured with modes designated by a user to the air conditioner 1.

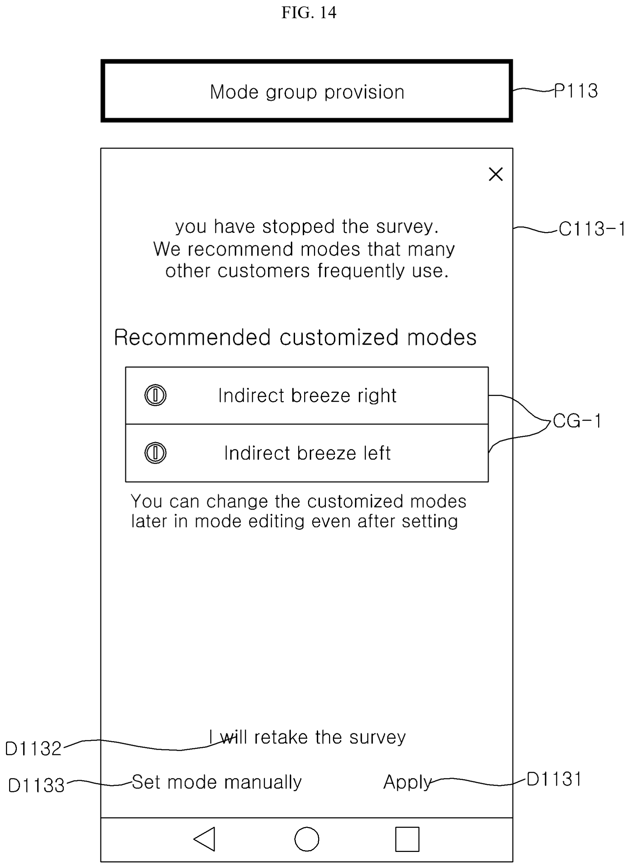

Meanwhile, a provision screen C113-1 in which predetermined modes are displayed through the external device 2 in a provision process P113 in which a mode group including a customized mode is provided to a user is illustrated in FIG. 14.

When the skip item D1123 is selected in all of the first input screen C1121, the second input screen C1122, and the third input screen C1123 in the input process P112 described above, and accordingly, the input of information on each subject is omitted, the external device 2 can output a provision screen C113-1 that proposes a preset predetermined mode CG-1 in the provision process P113. The preset predetermined mode CG-1 may include at least one of basic modes.

Meanwhile, the external device 2 can determine a preset predetermined mode CG-1 on the basis of a customized mode set for another user. For example, the external device 2 can determine a certain number of modes, among a plurality of modes set as customized modes for another user, according to the frequency with which they are set, as the preset predetermined mode CG-1, on the basis of a database for other users stored in the server 4.

Meanwhile, the provision screen C113-1 may include at least one of a re-input item 1121, a direct setting item 1122, and an application item 1123. The re-input item 1121, the direct setting item 1122, and the application item 1123 may be displayed so that a user can select them.

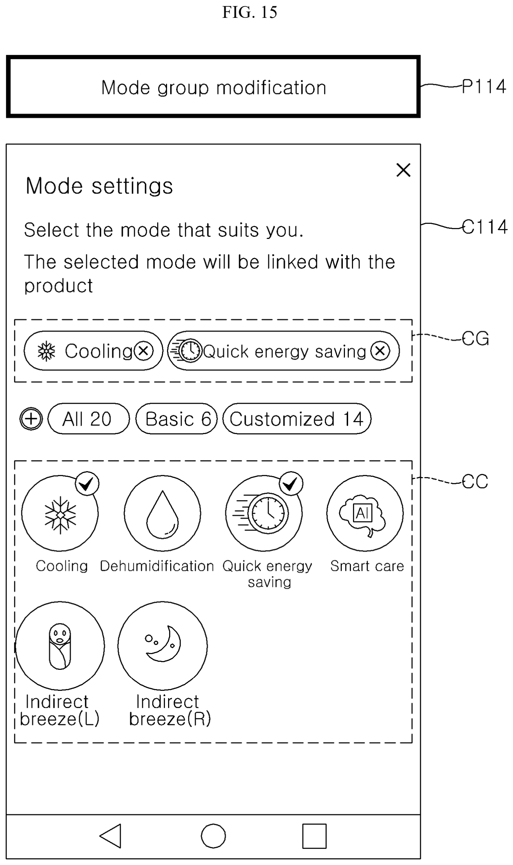

Meanwhile, a modification screen C114 that is output from the external device 2 in a modification process P114 in which a user can modify a mode group determined by the external device 2 is illustrated in FIG. 15.

The modification process P114 may be carried out by a user command even after the mode recommendation process P11 is terminated by the selection of the application item D1131 or 1123 on the provision screen C113 or C113-1, and may also be carried out even after the mode recommendation process P11 is terminated by the selection of the direct setting item D1133 or 1122 on the provision screen C113 or C113-1.

In the modification process P114, a user can directly edit a mode group CG to be provided by the air conditioner 1 from among various modes CC prepared in the external device 2. On the modification screen C114, the modes currently belonging to a mode group CG may be displayed, and a user can exclude any one of the modes belonging to the mode group CG or set any one of the modes not belonging to the mode group CG to belong to the mode group CG.

That is, in an embodiment of the present disclosure, the external device 2 may be configured to allow a user to change the modes of the mode group CG stored in the air conditioner 1. The air conditioner 1 may be configured to receive and store the mode group CG changed by the user from the external device 2.

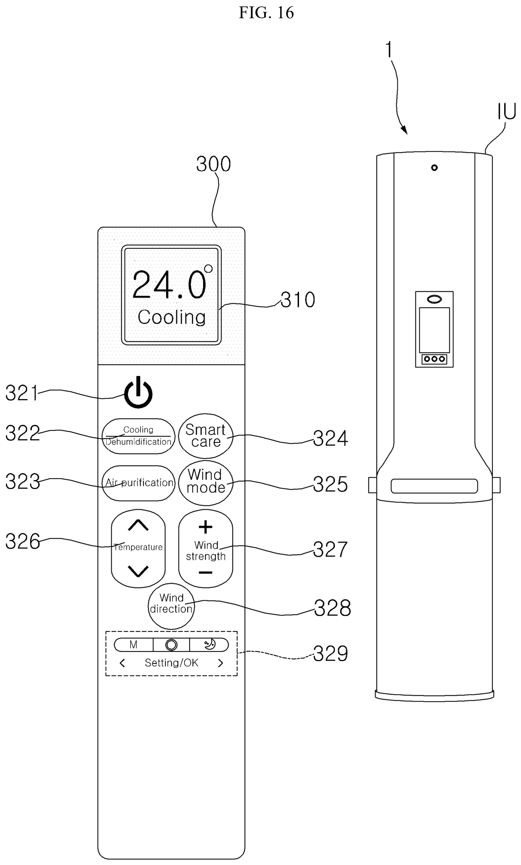

FIG. 16 is a diagram referenced in the description of the operation of an air conditioner, according to an embodiment of the present disclosure.

Referring to FIG. 16, the indoor unit IU of the air conditioner 1 may communicate with the remote controller 300. The air conditioner 1 may receive a user control command on the basis of a signal transmitted from the remote controller 300.

The remote controller 300 may include a display 310, a power on/off button 321, a button 322 for setting a basic mode, a button 323 for setting an air cleaning mode, a button 324 for setting a mode that operates by analyzing a surrounding environment and user characteristics, a button 324 for setting a customized mode, a button 326 for adjusting a target temperature, a button 327 for adjusting an air volume, a button 328 for adjusting an air direction, and a button 329 for other settings.

According to an embodiment, the air conditioner 1 can set a mode on the basis of an input in which a user presses the button 324 for setting a customized mode. In this case, if a plurality of modes is set as customized modes, the mode of the air conditioner 1 can be changed each time a user presses the button 324 for setting a customized mode. For example, if four modes are set as customized modes, when a user initially presses the button 324 for setting a customized mode, the mode of the air conditioner 1 can be set to a first mode set as a customized mode. Further, each time a user presses again the button 324 for setting a customized mode, the mode of the air conditioner 1 can be sequentially changed to the second mode, the third mode, and the fourth mode set as customized modes. Further, if the mode of the air conditioner 1 is set as the fourth mode and a user presses the button 324 for setting a customized mode, the mode of the air conditioner 1 can return to the first mode.

According to an embodiment, the air conditioner 1 can set a customized mode on the basis of an input in which a user presses the button 324 for setting a customized mode and the button 329 for other settings. For example, when a user presses the button 324 for setting a customized mode, a screen for selecting a customized mode may be displayed on the display 310. In this case, the user can select one of a plurality of customized modes using left and right buttons included in the button 329 for other settings. Further, when information on one of a plurality of customized modes is displayed on the screen of the display 310 and a user presses a confirm button included in the button 329 for other settings, a signal regarding the mode selected by the user among the plurality of customized modes can be transmitted to the air conditioner 1. The air conditioner 1 can set a mode on the basis of the signal regarding the mode selected by the user received from the remote controller 300.

Meanwhile, a subscription process P10 that can be performed in the purchase and delivery process P1 of the laundry treatment apparatus 1 is illustrated in FIG. 17. In the subscription process P10, the external device 2 can provide a subscription screen C10 to a user to carry out the subscription process P10.

For example, the external device 2 may include a terminal 3 operable by a user and capable of displaying screens, and can provide the subscription screen C10 through the terminal 3.

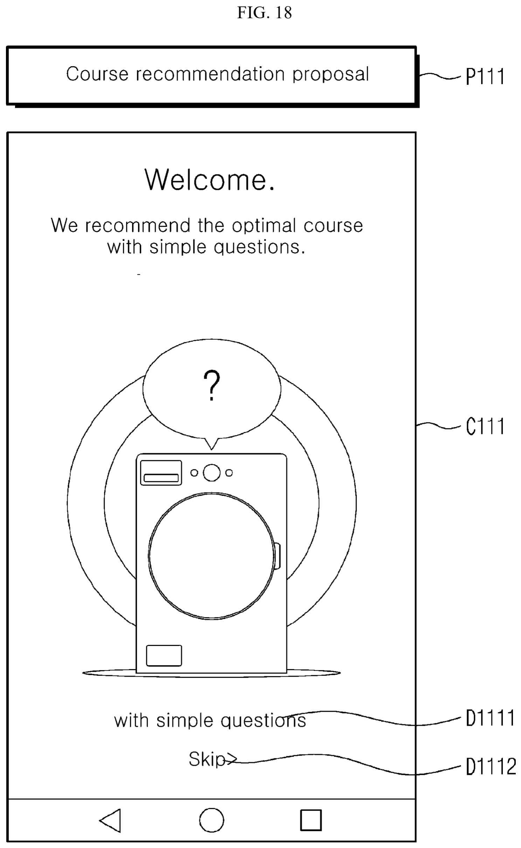

A screen according to a proposal process P111 in a course recommendation process P11 for determining a customized course CP for a user and providing a course group CG is illustrated in FIG. 18.

The external device 2 can perform the course recommendation process P11 for providing a course group including a customized mode to a user, and can output a proposal screen C111 in the proposal process P111 of the course recommendation process P11.

A user can proceed with the course recommendation process P11 through the external device 2 even before the delivery of the laundry treatment apparatus 1 is completed, and can be provided with the proposal screen C111 through the terminal 3.

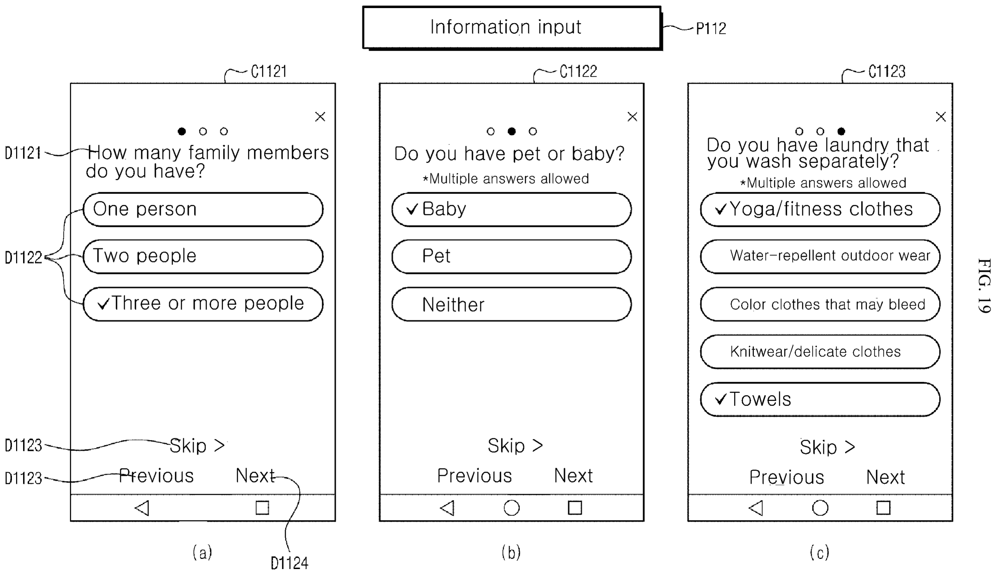

Meanwhile, input screens that are provided through the external device 2 in the input process P112 of the course recommendation process in the purchase and delivery process P1 are illustrated in FIG. 19.

Referring to FIG. 19, in an embodiment of the present disclosure, the external device 2 can collect information that is provided by a user through the input process P112 in which the user inputs his or her information.

A plurality of input screens having different subjects is illustrated in FIG. 19. FIG. 19(a) is a first input screen C1121 in which user information on a first subject is input, FIG. 19(b) is a second input screen C1122 in which user information on a second subject is input, and FIG. 19(c) is a third input screen C1123 in which user information on a third subject is input.

Referring to FIG. 19(a), the input screen may include a survey section D1121 for informing a user of the subject of information. Phrases, figures, or the like to indicate the type of information requested from the user, that is, survey content may be displayed in the survey section D1121.

As an example of the present disclosure, the first input screen C1121 may display survey content about family members in the survey section D1121 to receive input on the number of user's family members.

The user can input information to the external device 2 by understanding the survey content and selecting a selection item D1122 corresponding to the information that the user intends to input. In the first input screen C1121, the user can understand the survey content regarding the number of family members through the phrase in the survey section D1121, and can select a selection item D1122 corresponding to the user among a plurality of selection items D1122 corresponding to any one of one person, two persons, or three or more persons.

A first input screen C1121 for inputting the number of family members, a second input screen C1122 for inputting presence or absence of pets and/or infants, and a third input screen C1123 for inputting the main type of clothing desired by a user are illustrated in FIG. 19.

That is, in an embodiment of the present disclosure, information that is input by a user may include at least one or more of the number of family members, presence or absence of pets, presence or absence of infants, and the main type of clothing regarding the user.

In the first input screen C1121, a user can input information regarding the number of family members, and the external device 2 can determine a course suitable for a large amount of laundry or a course that is performed at high speed with a small amount as a customized course CP on the basis of the information.

The external device 2 can determine a course suitable for treating baby clothes or a course suitable for removing hair as a customized course CP on the basis of information regarding presence or absence of pets and/or infants in the second input screen C1122.

The external device 2 can determine, as a customized course CP, a course suitable for the main type of clothing on the basis of information regarding the main type of clothing that a user primarily wishes to treat, that is, the clothing to be treated, in the third input screen C1123.

An embodiment of the present disclosure, as described above, can collect information on user's lifestyle, environment, etc. from the external device 2 even before the laundry treatment apparatus 1 is installed, can analyze an appropriate course through the external device 2, and can provide it to the user.

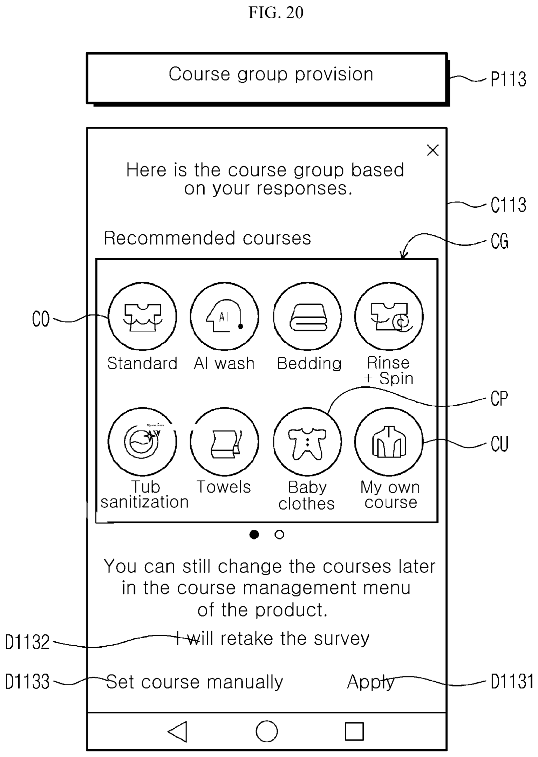

Meanwhile, a provision screen C113 in which courses belonging to a course group CG are displayed through the external device 2 in a provision process P113 in which a course group CG including a customized course CP is provided to a user is illustrated in FIG. 20.

The external device 2 can determine a customized course for a user on the basis of user's information input through the input process P112 described above, and can output a provision screen C113 for displaying a course group CG including the customized course in the provision process P113.

Accordingly, in an embodiment of the present disclosure, the course group CG that is transmitted to the control unit 80 of the laundry treatment apparatus 1 may include at least one or more customized courses CP. That is, the course group CG may include a customized course that is determined by the external device 2 on the basis of information provided from a user.

Through the input process P112, the external device 2 can determine a plurality of customized courses CP on the basis of the information and a plurality of customized courses CP can be included in the course group CG.

The course group CG may include the customized mode CP from among a plurality of course previously stored in the external device 2, and may be composed of courses determined to be suitable for the user through the external device 2.

The courses of the course group CG may be displayed on the suggestion screen C111. In the provision process P113, the user can easily check which courses belong to the course group CG suggested by the external device 2 through the provision screen C113.

Meanwhile, various courses stored in the external device 2 may include a user course CU. The user course CU may be a course in which a user directly determines setting values D232 for various options and stores them in the external device 2.

A course determined by reflecting a user's intention may, by its nature, be included in the course group CG to be provided by the laundry treatment apparatus 1. That is, the course group CG may include a user course CU in which a user determines default setting values of options through the external device 2.

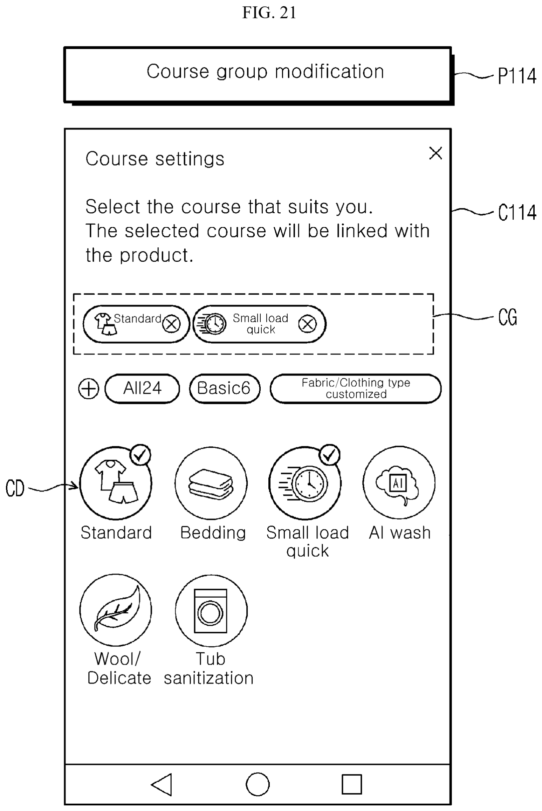

Meanwhile, a modification screen C114 that is output from the external device 2 in a modification process P114 in which a user can modify a course group CG determined by the external device 2 is illustrated in FIG. 21.

In the modification screen C114 illustrated in FIG. 21, a plurality of courses is provided and categorized by type. Initial courses that are basically provided in the laundry treatment apparatus 1 among a plurality of courses are shown in FIG. 21.

The initial course may include a plurality of initial courses, and at least some of the plurality of initial courses may correspond to basic courses CD that cannot be deleted from the laundry treatment apparatus 1. The basic course CD may also include a plurality of basic courses.

The initial course, similar to the basic course CD, may be stored in the control unit 80 of the laundry treatment apparatus 1 from the time of shipment of the laundry treatment apparatus 1. However, the others of initial courses excluding the basic course DC can be deleted from the laundry treatment apparatus 1 by a user.

When some of initial courses are deleted through the external device 2, initial course information deleted in the process in which the laundry treatment apparatus 1 receives and stores the customized course CP from the external device is transmitted to the control unit 80, and the control unit 80 can delete the initial course intended to be deleted by a user.

However, whether to delete the basic course CD and the initial course is not necessarily limited as described above, and, if necessary, the basic course CD may also be set to be deletable by a user, and the initial course may also be set to be undeletable by a user.

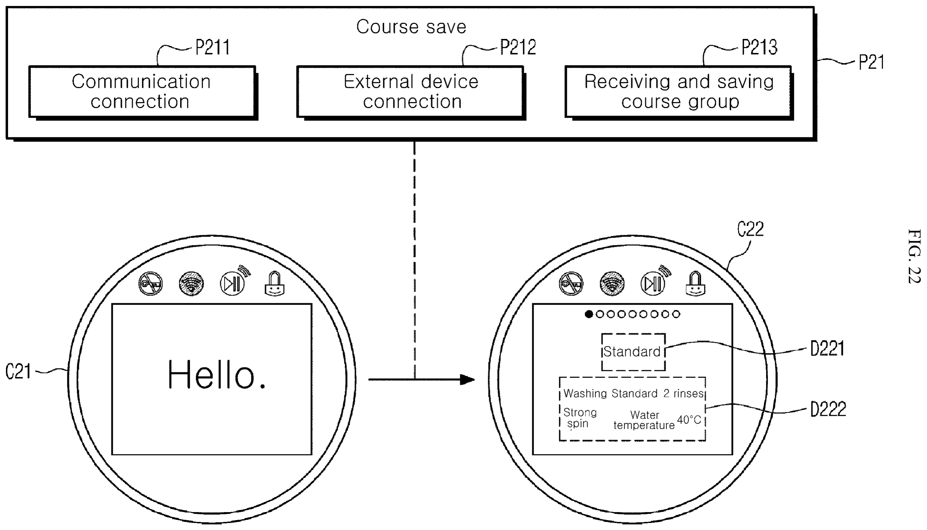

Meanwhile, a course storage process P21 that can be performed in the installation process P2 of the laundry treatment apparatus 1 after the purchase and delivery process P1 is illustrated in FIG. 22.

In the installation process P2, a communication connection process P211 that connects the control unit 80 of the laundry treatment apparatus 1 to the aforementioned communication device 5, etc. to enable communication can be performed. The communication connection process P211 may be performed during a first booting process after the laundry treatment apparatus 1 is disposed at the location requested by the user.

However, the communication connection process P211 may be performed in accordance with a user's intention even in a use process P3, in which a user uses the laundry treatment apparatus 1, after the installation process P2.

After the communication connection process P211, the control unit 80 can perform a connection process P212 in which information can be exchanged with the aforementioned external device 2 through communication with the communication device 5. The control unit 80 may perform the connection process P212 through direct communication with the external device 2.

In the connection process P212, the control unit 80 may be in a state capable of exchanging information with the external device 2. Accordingly, the control unit 80 may be described as being in a state capable of communicating with the external device 2 through the connection process P212.

The control unit 80, which is capable of communicating with the external device 2, for example, the server 4, can receive information about the course group CG described above from the external device 2 and perform the storage process P213 for the course group CG. That is, the control unit 80 can store a course group CG that is determined and transmitted from the external device 2 provided outside the cabinet 10 among a plurality of courses.

Information about the plurality of courses may be previously stored in the control unit 80, and list information of the courses belonging to the course group CG, which is to be provided as selectable to a user among the plurality of courses, may be stored in the control unit 80 through the storage process P213.

That is, the plurality of courses is stored in advance in the control unit 80, but only the courses received as belonging to a course group CG may be displayed as selectable to the user, while the others may not be displayed.

Meanwhile, unlike the above description, in a state in which information on the plurality of courses is not stored in the control unit 80, only information on courses belonging to a course group CG may be stored in the control unit 80 through the storage process P213.

As described above, there may be various methods by which a course group CG is stored in the control unit 80 through the storage process P213, but, as a result of performing the storage process P213, only courses belonging to the course group CG among a plurality of courses may be set to be selectable by a user in the control unit 80.

Accordingly, in an embodiment of the present disclosure, the laundry treatment apparatus 1 including the control unit 80 can store the course group CG transmitted from the external device 2 and provide the courses included in the course group CG as selectable to a user.

Meanwhile, the control unit 80 can receive and store the course group CG including the customized course CP from the external device 2 upon initial communication with the external device 2.

That is, according to the laundry treatment apparatus 1 or the laundry treatment system of an embodiment of the present disclosure, a course group CG, which is to be provided through the laundry treatment apparatus 1, may be determined by the external device 2 before the laundry treatment apparatus 1 is installed at the location requested by a user, the laundry treatment apparatus 1 may perform the course storage process P21 in the installation process P2, and the courses of the course group CG may be stored so that they are selectable by a user.

The laundry treatment apparatus 1 or the control unit 80 of the laundry treatment apparatus 1 can receive the course group CG from the external device 2 and store it upon initial communication with the external device 2 after installation of the laundry treatment apparatus 1.

That is, since the laundry treatment apparatus 1 performs the communication connection process P211, the connection process P212, and the storage process P213 during initial boot, even if the user or the seller does not separately set courses, a course group CG determined by the external device 2 can be automatically stored in the laundry treatment apparatus 1 and provided.

A boot screen C21 and a course selection screen C22 that are output from the input/output unit 110 of the laundry treatment apparatus 1 is illustrated in FIG. 22. When power is supplied to the laundry treatment apparatus 1 through the operation of the power button described above, the input/output unit 110 can indicate that power has been supplied and output the boot screen C21 while the laundry treatment apparatus 1 is being prepared for use.

The boot screen C21 may display various contents. In the boot screen C21 of FIG. 22, a greeting message is displayed to make a user feel familiar, but this may be changed in various ways as needed.

Meanwhile, after the boot screen C21, when the laundry treatment apparatus 1 is ready for use, the input/output unit 110 can output a course selection screen C22 for a user to select a course. On the course selection screen C22, the courses of a course group CG provided to the laundry treatment apparatus 1 can be displayed.

Specifically, the course selection screen C22 may include a course display section D221, and information indicating which course is currently displayed on the course selection screen C22 can be displayed in the course display section D221. For example, characters or shapes for indicating the type of course, such as the name of the course, may be displayed in the course display section D221.

As described above, the courses of a course group CG determined through the external device 2 can be stored in the laundry treatment apparatus 1 and provided to a user. For example, the courses of the course group CG can be displayed on the course selection screen C22, and a user can command execution of the courses displayed on the course selection screen C22 by operating the execution button described above.

On the course selection screen C22, some of the courses of the course group CG may be displayed in consideration of limitations of the output section of the display. For example, any one of the courses of the course group CG may be displayed on the course selection screen C22, and a user may change the course displayed on the course selection screen C22 to another course by touching the display unit 115 or using a movement input unit.

The movement input unit may be included in the input/output unit 110 and can receive a user command for changing an item output from the display unit 115 or changing a selection target.

The movement input unit may be provided in various forms, such as a button type, a knob type, or a touchpad type. A user can command that a desired course be displayed on the course selection screen C22 by operating the movement input unit, and can command execution of the course by operating the execution button while the desired course is displayed on the course selection screen C22.

Meanwhile, the course selection screen C22 may include an option display section D222. In an embodiment of the present disclosure, courses may each have a plurality of options whose setting values D232 can be changed, and current setting values D232 for at least one or more options set in the courses displayed on the course selection screen C22 can be displayed in the option display section D222.

In an embodiment of the present disclosure, the course storage process P21 described above can be performed after output of the boot screen C21, and when the course storage process P21 is terminated, the course selection screen C22 can be provided to a user.

In an embodiment of the present disclosure, the course storage process P21 is automatically performed by the control unit 80 until output of the course selection screen C22, which allows course selection, after power is supplied to the laundry treatment apparatus 1, whereby user convenience can be improved.

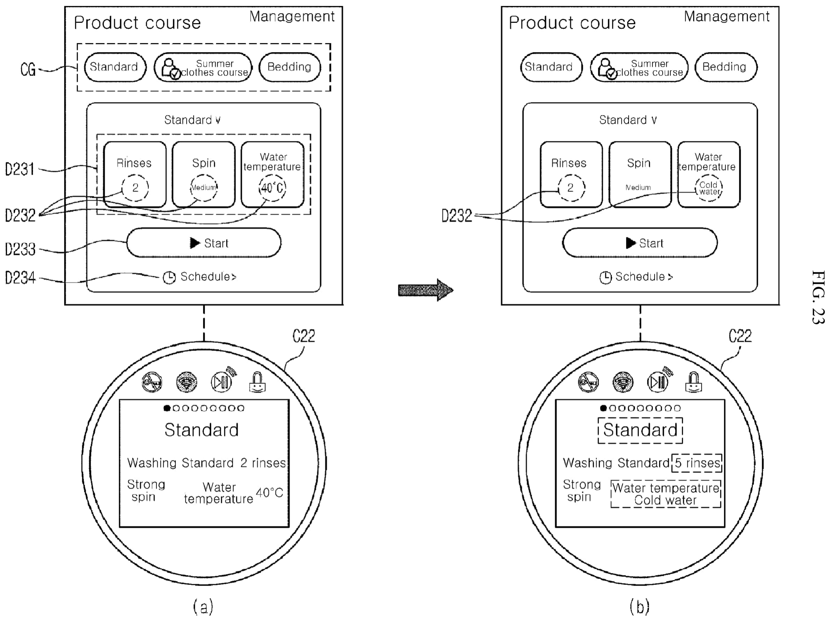

Meanwhile, a state in which setting values D232 of the options of courses displayed on the course selection screen C22 are changed through the external device 2 in accordance with an embodiment of the present disclosure is illustrated in FIG. 23. The course selection screen C22 before changing the setting values D232 through the external device 2 is illustrated in FIG. 23(a), and the course selection screen C22 after changing the setting values D232 through the external device 2 is illustrated in FIG. 23(b).

Specifically, according to an embodiment of the present disclosure, setting values D232 of the options of a current course may be displayed to a user through the course selection screen C22 during the use process P3 of the laundry treatment apparatus 1.

Meanwhile, in a situation in which the course selection screen C22 is output through the display unit 115 of the laundry treatment apparatus 1, an external course setting screen C23 that allows a user to set a course may be output through the terminal 3 or the like.

Information of the course currently displayed on the course selection screen C22 can be output on the external course setting screen C23. For example, the external course setting screen C23 may include an external option display section D231 in which setting values D232 of the options of a course are displayed.

Meanwhile, according to an embodiment of the present disclosure, a user can change setting values D232 of the options through the external course setting screen C23 of the terminal 3. In the external course setting screen C23, the options may be displayed so as to be selectable by a user, and a user can select the options and change each setting value D232.

Meanwhile, when a user changes the setting values D232 of options through the external course setting screen C23 as illustrated from FIG. 23(a) to FIG. 23(b), the control unit 80 of the laundry treatment apparatus 1 can control the display unit 115 in linkage with the change in the setting values D232 through the external course setting screen C23.

That is, when the setting values D232 of options are changed in the external course setting screen C23, the display unit 115 can change and display the setting values D232 of the options in the option display section D222 of the course selection screen C22 so as to correspond to the changes in the external course setting screen C23.

Accordingly, a user can conveniently adjust options of courses to be performed by the laundry treatment apparatus 1 through the terminal 3 or the like without operating the laundry treatment apparatus 1, and furthermore, a process or button unit for changing setting values D232 of options in the laundry treatment apparatus 1 may be removed.

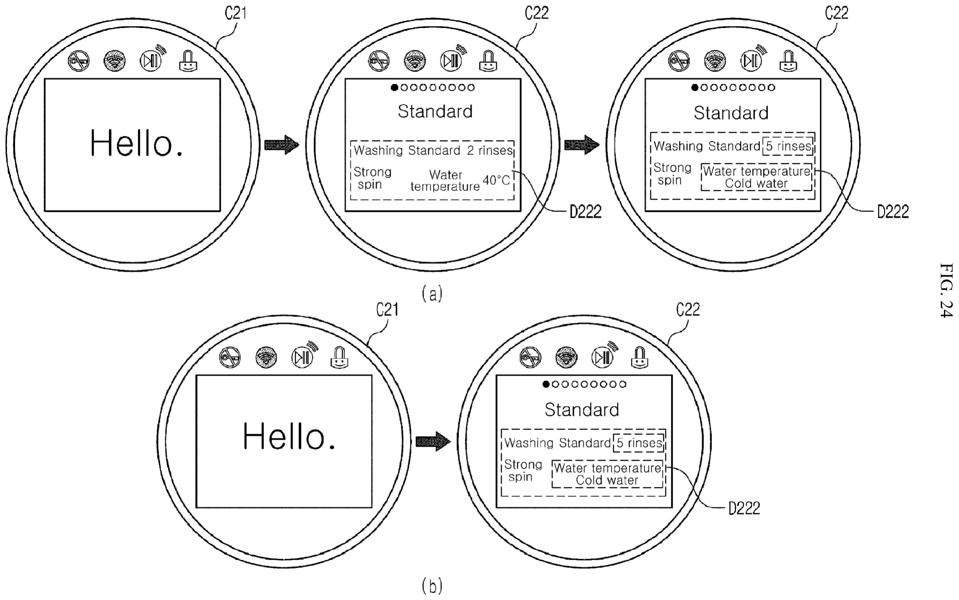

Meanwhile, a process in which default setting values for options of a course are changed and stored in accordance with an embodiment of the present disclosure is illustrated in FIG. 24. A state before the default setting values are changed is illustrated in FIG. 24(a), and a state after the default setting values are changed is illustrated in FIG. 24(b).

Specifically, in an embodiment of the present disclosure, default setting values of options can be stored for each course of the course group CG in the laundry treatment apparatus 1. Each of a plurality of options may have a plurality of setting values D232 stored in advance in the control unit 80, and by selecting any one of the plurality of setting values D232, the corresponding option can be set.

For example, a course for washing laundry may include a rinsing operation that rinses residual foreign substances or detergent from the laundry by rotating the drum 20 with water stored in the tub 30.

Further, the course may have a rinsing option set as an option corresponding to the number of times the rinsing operation is performed. Further, the rinsing option may have a plurality of setting values D232 corresponding to the number of rinses, for example, setting values D232 such as one, two, or three times.

If the setting value D232 of the rinsing option is set to two for the course, the rinsing operation may be performed twice during execution of the course. In this way, an embodiment of the present disclosure can adjust detailed procedures of courses by changing the setting values D232 of the options.

Meanwhile, default setting values for each option may be stored in the control unit 80. The default setting values are setting values D232 of options provided by default through the control unit 80 before the setting values D232 are changed by a user, and if no separate change is made to the setting values D232, the corresponding course may be performed with the corresponding option set to the default setting values.

Meanwhile, as described above, in an embodiment of the present disclosure, setting values D232 for options of a course may be changed by a user. For example, as illustrated in FIG. 24(a), the rinsing option of the corresponding course may be provided with a default setting value of two, and the setting value D232 of the rinsing option may be changed to five by a user.

A change in the setting value D232 of such an option may be a result reflecting user's preference. For example, in a typical usage environment, a user may wish to perform a course adjusted with a preferred setting value D232 instead of the default setting value stored in advance in the control unit 80 for a specific option.

In consideration of this, in an embodiment of the present disclosure, if a setting value D232 changed by a user from a default setting value is recorded over a reference number of times for any one of the courses of the course group CG, the laundry treatment apparatus 1 can store the setting value D232 changed by the user as the default setting value for that course.

As an example of the present disclosure, FIG. 24(a) may illustrate a process in which the setting value D232 of any one option is changed from a default setting value by a user and the corresponding course is performed, and FIG. 24(b) may illustrate a process in which a default setting value of a specific option is changed and provided to the user after the change in the setting value D232 and the course execution as illustrated in FIG. 24(a).

Specifically, a user can perform a course by changing a setting value D232 of any one option from a default setting value to another value for any one course.

When the laundry treatment apparatus 1 is used again after completion of the course, the control unit 80 can store the different value as the default setting value of the option and can provide the different value as the setting value D232 of the option in the course, instead of the previous default setting value.

The timing of storing the setting value D232 of the option set by the user as the default setting value may be the time of performing the course after the setting value D232 of the option is changed, or the time of completion of the course, or the time when the laundry treatment apparatus 1 is rebooted after completion of the course.

Further, the number of repetitions for a user to store the setting value D232 changed by the user as the default setting value of the option may be required. For example, when a corresponding course is repeatedly performed over a predetermined number of repetitions with the same setting value D232, the control unit 80 can store the setting value D232 as the default setting value of the corresponding option. The number of repetitions may vary, for example, from one to five.

An embodiment of the present disclosure stores the setting value D232 of the option changed by a user as a default setting value, whereby it is possible to minimize the inconvenience caused by the user changing options by reflecting the user's preference.

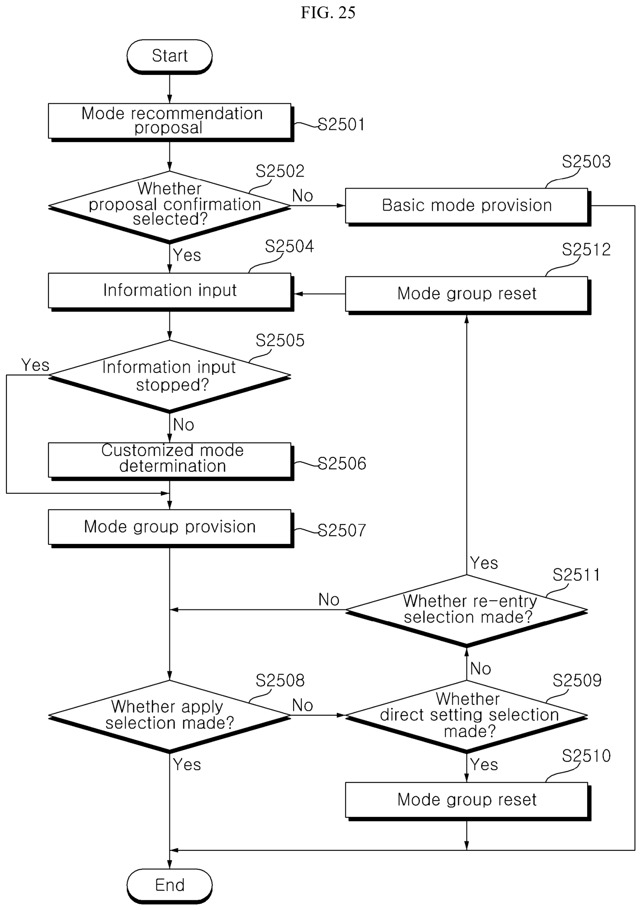

FIG. 25 is a flowchart illustrating an operation method of a system, according to an embodiment of the present disclosure. The control method may be targeted to the system, and may also be defined for the home appliance 1. Duplicate descriptions with respect to the contents explained in FIGS. 1 to 24 are omitted.

Referring to FIG. 25, a control method according to an embodiment of the present disclosure may include a proposal step S2501. In the proposal step S2501, the proposal screen C111 can be provided to a user through the external device 2, and the user can select whether to perform the course recommendation process P11.

In a proposal acceptance determination step S2502, the external device 2 can determine whether the user accepts performing the mode recommendation process P11 through selection of the proposal acceptance item D1111, or the like.

In the proposal acceptance determination step S2502, when it is determined that the user rejects performing the mode recommendation process P11 by selecting a proposal rejection item D1112 or the like, the external device 2 can store a mode group composed of the aforementioned basic modes or initial modes through a basic mode provision step S2503. The external device 2 can transmit the mode group composed of the basic modes or initial modes to the home appliance 1 in the installation process P2 of the home appliance 1.

In the proposal acceptance determination step S2502, when it is determined that the user accepts performing the mode recommendation process P11 by selecting a proposal acceptance item D1111 or the like, the external device 2 can perform an input step S2504.

In the input step S2504, information provided from the user can be input to the external device 2. The external device 2 can perform the aforementioned input process P112 and receive information from the user.

In the step in which information is input to the external device 2, information can be input to the external device 2 through an input process P112 in which a user inputs information. In the input process P112, a plurality of selection items D1122 that a user can select can be provided to a user.

By the user selecting at least one of the plurality of selection items D1122, information can be input to the external device 2. The input process P112 in which a user inputs information is performed multiple times, so multiple pieces of information can be input to the external device 2.

In an input skip determination step S2505, the external device 2 can determine whether information input for each subject is omitted in response to the skip item D1123 being selected in all of the first input screen C1121, the second input screen C1122, and the third input screen C1123.

In a customized mode determination step S2506, the external device 2 can determine a customized mode on the basis of user information input through the input process P112. In the customized mode determination step S2506, among a plurality of modes performed by the home appliance 1 for air conditioning, a customized mode can be determined on the basis of information provided from the user to the external device 2.

The external device 2 can determine at least one customized mode on the basis of a plurality of pieces of information input in the input step S2504 and can add it to a mode group.

In a mode group provision step S2507, a mode group including the customized mode and to be provided to the home appliance 1 can be determined by the external device 2 and provided to the user. The external device 2 can provide the mode group that is proposed to the user through the aforementioned provision screen C113 or the like. Meanwhile, when it is determined in the input skip determination step S2505 that input of information for each subject is omitted, the external device 2 can provide a preset predetermined mode CG-1 that is proposed to the user through the aforementioned provision screen C113-1 or the like.

In a mode application determination step S2508, the external device 2 can determine whether the user approves saving the mode group. The external device 2 can determine whether the user wishes to confirm the content of the mode group by selecting an application item D1131 or the like on the provision screen C113 in which the content of the mode group is displayed. Alternatively, the external device 2 can determine whether the user wishes to confirm the content of the mode group by selecting the application item D1131 or the like on the provision screen C113-1 in which the content of the preset predetermined mode CG-1 is displayed.

Meanwhile, the control method of the system according to an embodiment of the present disclosure, although not illustrated in FIG. 25, may include a step in which the mode group of the external device 2 is transmitted to and stored in the home appliance 1 after the mode application determination step S2508, and a step in which the modes of the mode group are provided by the home appliance 1 to be selectable by the user.

In the step in which the mode group of the external device 2 is transmitted to and stored in the home appliance 1, the home appliance 1 can receive and store the mode group including a customized mode from the external device 2 during initial communication with the external device 2.

Meanwhile, when it is determined in the mode application determination step S2508 that the user does not wish to confirm the content of the mode group by selecting the application item D1131 or the like, the external device 2 can determine, through a direct setting determination step S2509, whether the user wishes to directly determine the modes of the mode group.

For example, the external device 2 can determine whether the user wishes to directly determine the modes of the mode group by selecting a direct setting item D1133 or the like on the provision screen C113 for a mode group.

In the direct setting determination step S2509, when it is determined that the user wishes to directly select modes and save them as a mode group by selecting the direct setting object D1133 or the like, the external device 2 can reset the previously determined mode group information through a mode group reset step.

For convenience of explanation, the mode group reset step may be defined as a first mode group reset step S2510, and after the first mode group reset step S2510, the user may directly edit the modes to be included in the mode group through the external device 2.

Meanwhile, if the direct setting object D1133 or the like is not selected in the direct setting determination step S2509, the external device 2 can perform a re-entry determination step S2511. In the re-input determination step S2511, the external device 2 can determine whether the user wishes to reset and re-enter the information input through the input step S2504 described above. For example, the external device 2 can determine whether a re-entry item 1021 or the like is selected by the user on the provision screen C113 in which the mode group is displayed.

In the re-entry determination step S2511, when the re-entry item D1132 is selected by the user or it is determined that the user wishes to re-enter the information, the external device 2 can reset the currently determined mode group information through the mode group reset step and perform the aforementioned input step S2504 again. Here, for convenience of description, the mode group reset step may be defined as a second mode group reset step S2512.

In the second mode group reset step S2512, the external device 2 can reset the contents of the previously determined mode group, perform the input step S2504 again, and determine a customized mode and a mode group on the basis of the information that is provided again to the user.

As described above, according to at least one embodiment of the present disclosure, it is possible to conveniently provide modes (or courses) that are necessary or suitable for a user among various modes (or courses).

Further, according to at least one embodiment of the present disclosure, a customized mode for a user can be set from among various modes (or courses) without using an air conditioner.

Further, according to at least one embodiment of the present disclosure, a customized mode (or customized course) for a user can be set in advance and provided to the user before use of an air conditioner.

Referring to FIGS. 1 to 25, the system according to an embodiment of the present disclosure may includes: a home appliance 1; and an external device 2 which is provided outside the home appliance 1 and determines at least one customized mode among a plurality of modes on the basis of information provided from a user, wherein the home appliance 1 stores the at least one customized mode transmitted from the external device 2 and provides one of the at least one customized mode to be selected by the user.

Further, according to an aspect of the present disclosure, the home appliance 1 can receive and store the customized mode from the external device 2 upon initial communication with the external device 2.

Further, according to an aspect of the present disclosure, a basic mode among the plurality of modes can be previously stored in the home appliance 1, and the home appliance 1 can provide one of the basic mode and the customized mode to be selected by the user.

Further, according to an aspect of the present disclosure, the basic mode may be incapable of being deleted by the user from the home appliance 1.

Further, according to an aspect of the present disclosure, the home appliance 1 can provide the basic mode, excluding the customized mode, to be selectable before communication with the external device after installation.

Further, according to an aspect of the present disclosure, the external device 2 includes a terminal through which the information is input by the user and a server communicating with the terminal, and the terminal or the server can determine the customized mode on the basis of the information.

Further, according to an aspect of the present disclosure, the external device 2 can receive a plurality of pieces of information from the user through a plurality of input processes, and can determine at least one customized mode on the basis of the plurality of pieces of information.

Further, according to an aspect of the present disclosure, the home appliance 1 is an air conditioner including an indoor unit and an outdoor unit, and the information received through the plurality of input processes may include at least one of activities performed indoors, wind preferred by the user, and air quality conditions preferred by the user.

Further, according to an aspect of the present disclosure, the home appliance 1 is a laundry treatment apparatus that includes an accommodating unit receiving and rotating laundry and performs modes for treating the laundry through rotation of the accommodating unit, and the information received through the plurality of input processes may include at least one of the number of family members, presence or absence of pets, presence or absence of infants, and the main types of clothing regarding the user.

Further, according to an aspect of the present disclosure, the external device 2 can determine the customized mode again when the information is provided again by the user after determining the customized mode.

Further, according to an aspect of the present disclosure, the external device 2 can determine the customized mode before installation of the home appliance 1.

The home appliance 1 according to an aspect of the present disclosure includes: a communication unit 210 configured to communicate with the external device 2 provided outside the home appliance 1; a memory 230; and a control unit 250, wherein the control unit 250 may store at least one customized mode transmitted from the external device 2 in the memory 230 and provide one of the at least one customized mode to be selected by the user, and the customized mode may be determined by the external device 2 on the basis of information provided from the user among a plurality of modes.

Further, according to an aspect of the present disclosure, the control unit 250 can receive the customized mode from the external device 2 and store the customized mode in the memory 230 upon initial communication with the external device 2.

Further, according to an aspect of the present disclosure, the memory 230 can store, in advance, a basic mode among the plurality of modes before initial communication with the external device 2, and the control unit 250 can provide one of the basic mode and the customized mode to be selected by the user.

Further, according to an aspect of the present disclosure, the basic mode may be incapable of being deleted by the user from the memory 230.

Further, the accompanying drawings are provided only for easy understanding the embodiments described herein without limiting the spirit described herein and should be understood as including all of changes, equivalents, and substitutes included in the spirit and scope of the present disclosure.

Meanwhile, the operation method of the present disclosure may be implemented as processor-readable codes in a processor-readable recording medium. The processor-readable recording medium includes all kinds of recording devices that keep data that can be read by a processor. The processor-readable recording medium, for example, may be a ROM, a RAM, a CD-ROM, a magnetic tape, a floppy disk, and an optical data storage device, and includes a carrier wave such as transmission through the internet. Further, the processor-readable recording medium may be distributed to computer systems that are connected through a network and may keep and execute processor-readable codes.

Further, although exemplary embodiments of the present disclosure were illustrated and described above, the present disclosure is not limited to the specific exemplary embodiments and may be modified in various ways by those skilled in the art without departing from the scope of the present disclosure described in claims, and the modified examples should not be construed independently from the spirit of the scope of the present disclosure.

## Claims

1. A system comprising:
a home appliance; and
an external device provided outside the home appliance and determining at least one customized mode among a plurality of modes on the basis of information provided from a user,
wherein the home appliance
stores the at least one customized mode transmitted from the external device, and
provides one of the at least one customized mode to be selected by the user.

2. The system of claim 1, wherein the home appliance receives and stores the customized mode from the external device upon initial communication with the external device.

3. The system of claim 1, wherein a basic mode among the plurality of modes is previously stored in the home appliance, and
the home appliance provides one of the basic mode and the customized mode to be selected by the user.

4. The system of claim 3, wherein the basic mode is incapable of being deleted by the user from the home appliance.

5. The system of claim 3, wherein the home appliance provides the basic mode, excluding the customized mode, to be selectable before communication with the external device after installation.

6. The system of claim 1, wherein the external device includes a terminal through which the information is input by the user and a server communicating with the terminal, and
the terminal or the server determines the customized mode on the basis of the information and transmits the customized mode to the home appliance.

7. The system of claim 1, wherein the external device
receives a plurality of pieces of information from the user through a plurality of input processes, and
determines at least one customized mode on the basis of the plurality of pieces of information and transmits the customized mode to the home appliance.

8. The system of claim 7, wherein the home appliance is an air conditioner including an indoor unit and an outdoor unit, and
the information received through the plurality of input processes includes at least one of activities performed indoors, wind preferred by the user, and air quality conditions preferred by the user.

9. The system of claim 7, wherein the home appliance is a laundry treatment apparatus that includes an accommodating unit receiving and rotating laundry and performs modes for treating the laundry through rotation of the accommodating unit, and
the information received through the plurality of input processes includes at least one of the number of family members, presence or absence of pets, presence or absence of infants, and the main types of clothing regarding the user.

10. The system of claim 1, wherein the external device determines the customized mode again when the information is provided again by the user after determining the customized mode, and transmits the customized mode to the home appliance.

11. The system of claim 1, wherein the external device determines the customized mode before installation of the home appliance and transmits the customized mode to the home appliance.

12. A home appliance comprising:
a communication unit communicating with an external device provided outside the home appliance;
a memory; and
a control unit,
wherein the control unit
stores at least one customized mode transmitted from the external device in the memory, and
provides one of the at least one customized mode to be selected by the user, and
the customized mode is determined by the external device on the basis of information provided from the user among a plurality of modes.

13. The home appliance of claim 12, wherein the control unit receives the customized mode from the external device and stores the customized mode in the memory upon initial communication with the external device.

14. The home appliance of claim 12, wherein the memory stores, in advance, a basic mode among the plurality of modes before initial communication with the external device, and
the control unit provides one of the basic mode and the customized mode to be selected by the user.

15. The home appliance of claim 14, wherein the basic mode is incapable of being deleted by the user from the memory.
